# EUROPEAN PATENT SPECIFICATION

(11) **EP 1 815 440 B1**
(45) Date of publication and mention of the grant of the patent: **02.05.2012**
(21) Application number: 05802626.1
(22) Date of filing: 11.11.2005
(51) Int. Cl.: G06T 15/08

(54) **VOLUME RENDERING APPARATUS AND METHOD**
VOLUMENWIEDERGABEVORRICHTUNG UND -VERFAHREN
APPAREIL ET PROCEDE DE RENDU DE VOLUME

(30) Priority: 26.11.2004 US 998192
(43) Date of publication of application: 08.08.2007
(73) Proprietor: Toshiba Medical Visualization Systems Europe, Ltd., Edinburgh EH6 5NP (GB)
(72) Inventor: DAY, Tim, Edinburgh EH6 5NP (GB); PAPAGEORGIOU, Pavlos, Edinburgh EH6 5NP (GB); CRAYFORD, Dominic, Edinburgh EH6 5NP (GB)
(74) Representative: Haines, Miles John L.S.
(86) International application number: PCT/GB2005/004345
(87) International publication number: WO 2006/056741

(56) References cited:
- SHEKHAR R ET AL: "CINE MPR: INTERACTIVE MULTIPLANAR REFORMATTING OF FOUR-DIMENSIONAL CARDIAC DATA USING HARDWARE-ACCELERATED TEXTURE MAPPING" IEEE TRANSACTIONS ON INFORMATION TECHNOLOGY IN BIOMEDICINE, IEEE SERVICE CENTER, LOS ALAMITOS, CA, US, vol. 7, no. 4, December 2003 (2003-12), pages 348-393, XP001193734 ISSN: 1089-7771
- XINYUE LI ET AL: "Time-critical multiresolution volume rendering using 3D texture mapping hardware" PROCEEDINGS IEEE/ACM SIGGRAPH SYMPOSIUM ON VOLUME VISUALIZATION AND GRAPHICS 2002. BOSTON,MA, OCT. 28 - 29, 2002, NEW YORK, NY : IEEE, US, 28 October 2002 (2002-10-28), pages 29-36, XP010654429 ISBN: 0-7803-7641-2
- TURLINGTON J. Z., HIGGINS W. E.: "New Techniques for Efficient Sliding Thin-Slab Volume Visualization" IEEE TRANSACTIONS ON MEDICAL IMAGING, vol. 20, no. 8, August 2001 (2001-08), pages 823-835, XP011036127

## Description

### BACKGROUND OF THE INVENTION

The invention relates to volume rendering, in particular to multi-planar reformatting (MPR) using a computer system that includes a graphics processing unit (GPU).

MPR volume rendering is a standard method of displaying two-dimensional (2D) representations of three-dimensional (3D) data sets collected by medical imaging equipment, such as computer-assisted tomography (CT) scanners, magnetic resonance (MR) scanners, ultrasound scanners and positron-emission-tomography (PET) systems. These 3D data sets are sometimes referred to as volume data. In the early days of medical imaging, rendering of volume data was performed on vendor-specific software and hardware associated with the scanner. However, for a number of years, application software to implement volume rendering on general purpose computers, for example standard personal computers and workstations, and which does not utilize any bespoke hardware has been well known.

Medical image data sets are generally large. Sizes of between 0.5 Gigabytes and 8 Gigabytes are not uncommon. For example, a medical image data set might comprise 1024x1024x1024 16-bit voxels which corresponds to approximately 2 Gigabytes of data. From this an image comprising 1024x1024 16-bit pixels might be rendered. Furthermore, a common desire when viewing rendered images is to generate a sequences of images (sometimes referred to as a cine) which is viewed by a user as a movie. By viewing a cine a trained user is able to form a three-dimensional mental image of the object represented by the volume data. To be efficient, a frame rate for a cine of 15 frames per second (fps) might be considered desirable, with higher frame rates being preferred. It is also preferable if cines can be generated and displayed in real time.

Medical volume rendering is thus highly computationally intensive and the processing power of a modem general purpose computer's CPU is often inadequate for performing the task at an acceptable speed.

Modem personal computers and workstations generally include a graphics card, and in most cases the graphics card includes a Graphics Processing Unit (GPU). In terms of aggregate processing power, modern GPUs typically outperform a computer's central processing unit (CPU) by roughly an order of magnitude.

Thus the present invention is based on the premise that it would be desirable to harness the processing power available in a GPU to perform the volume rendering process. This is not a new idea.

Although not originally designed with this use in mind, GPUs do have sufficient general programmability that they can be applied to the task of volume rendering, in particular, to volume rendering in medicine, where the task is usually to render images of the internal organs of human patients. However, while a GPU might have sufficient raw computing power to perform medical image rendering, it is nonetheless a difficult task to implement a practical GPU-based medical image renderer.

Difficulties arise because the medical image volume data is typically larger than the memory available on the graphics card supporting the GPU, and because of the limited bandwidth available for the transfer of data from the system memory associated with the CPU to the graphics card. A modem graphics card will typically have a memory of around 256 or 512 Megabytes, for example. Further difficulties arise because volume data are generally stored linearly in system memory. For example, volume data comprising voxels aligned with *x*- *y-* and *z*- co-ordinate axes will generally be stored such that neighboring voxels in the x-axis occupy neighboring locations in system memory, neighboring voxels in the *y*-axis are separated by one row of *x*-axis voxels, and neighboring voxels in the *z*-axis are separated by the number of voxels in an *xy*-plane. This difficulty is especially important in MPR volume rendering because MPR rendering frequently requires access to voxels arranged in an arbitrarily oriented plane which includes voxels spread throughout system memory and not in a contiguous series which would be more easy to access. Although for a given MPR view it is possible to duplicate the volume data in system memory in a more appropriate order, this is generally undesirable because of the cost in memory overheads.

One known way to help address these difficulties is to re-order the voxels in system memory into a series of regular gridded blocks, for example as described by Lichtenbelt et al. in "Introduction to Volume Rendering", Hewlett-Packard Company, Prentice-Hall PTR, New Jersey, 1998 [1]. By doing this, groups of neighboring voxels in volume space can be more closely located in system memory. Furthermore, the size of individual blocks of voxels can be selected such that they can be processed separately from one another during rendering within the memory available on the graphics card supporting the GPU.

However, while Lichtenbelt et al.'s scheme can help to some extent in efficiently outsourcing the rendering computation from the CPU to the GPU, a number of performance restrictions remain. In particular, the system bus traffic associated with the transfer of blocks of voxels from system memory to the graphics card for processing by the GPU is highly variable. In the case that the block(s) containing the voxels required for rendering at a given instant are loaded in memory on the graphics card, the rendering process can proceed at the rate of the GPU's ability to process. However, as voxels which are in a block which is not loaded to the graphics card memory become required by the rendering algorithm, it is necessary for the processing to halt while the new block is retrieved from system memory by the CPU and transferred to the graphics card for use by the GPU. This can lead to stilted and jerky performance, especially during real-time cine.

Accordingly, there is a need for an apparatus and method for providing GPU-based volume rendering which provides for more consistent performance.

Shekhar and Zagrodsky in IEEE Transaction on Information Technology in Biomedicine, Volume 7, Number 4, Pages 384-393 (2003) disclose a method for cine MPR by interactive multiplanar reformatting of four-dimensional cardiac data using hardware-accelerated texture mapping. By four-dimensional it is meant space (3D) plus time (1D) to indicate that the beating heart is being viewed in real time by MPR. The method is applied to various modalities including Doppler, SPECT (single photon emission computed tomography) and ultrasound. The hardware platform is a PC with graphics card, i.e. a GPU.

The method subdivides the volume data set into blocks, which are referred to as "bricks" in the article, the blocks being significantly smaller than the size of the GPU's texture memory. For the most part, the MPR plane is held static to watch the beating heart, and the sequence of frames has a natural periodicity dictated by one complete cardiac cycle. Many of the blocks will thus be re-used from frame-to-frame, these being referred to as "common bricks", and this fact is exploited in the method.

The policy adopted for pre-loading blocks into the GPU memory is first to determine the total amount of data required to store all blocks of a set of frames representing one complete cardiac cycle and then determine how this compares with the size of the GPU's texture memory. Typically the texture memory will be smaller than required to store all these data. If the texture memory can only accommodate a fraction, for example 60%, of the data, then the policy is, prior to running the cine, to initialize the texture memory by loading approximately this fraction, i.e. 60%, of the data into it. This means that only approximately 40% of the data will need to be loaded "on-the-fly", i.e. during the cine MPR process, and importantly the amount of data that needs to be transferred from the CPU to the GPU during each frame is kept approximately constant, i.e. at 40% of the total data needed. This should keep the loading latency approximately constant from frame to frame and thus ensure a regular frame rate.

During normal viewing when the MPR plane is static, the policy is implemented to ensure that "common bricks", i.e. blocks that are needed in successive frames, remain in the GPU memory, whereas "single-use bricks", i.e. blocks specific to individual frames, are loaded on-the-fly. On the other hand, when the MPR plane is being moved by the user, referred to as periods of "interaction" in the article, the method forgoes common brick determination and reverts to a simple least recently used (LRU) policy in which "stale bricks" are overwritten with "fresh bricks".

It will thus be understood that the block-loading policy of the method of Shekhar and Zagrodsky exploits specific aspects of the particular application of viewing the time evolution of a static MPR plane of a cyclically moving subvolume, i.e. the heart, and is not generally applicable to cine MPR of a volume data set. In particular, it cannot be applied to conventional cine MPR in which the imaging plane is moved through a volume data set, e.g. up and down through the brain, since there will generally be no "common bricks" from frame to frame. In other words, the general situation is the "interaction" situation of Shekhar and Zagrodsky for which only a simple LRU policy is applied.

### SUMMARY OF THE INVENTION

According to a first aspect of the invention, there is provided an apparatus for rendering a sequence of multiplanar reformating, MPR, images from a set of volume data (48) defined by an MPR plane (72) moving through the volume data, the apparatus comprising a central processing unit, CPU, (24) coupled to a system memory (46) storing the volume data, and a graphics processing unit, GPU, (44) coupled to a GPU memory (56) and the CPU, wherein the apparatus is operable to:
(a) notionally divide the set of volume data into a plurality of blocks of voxels according to a geometrical construct;
(b) predict from current and/or previous positions of the MPR plane which blocks of the volume data may be required for display at a future time when the MPR plane has moved;
(c) pre-load blocks predicted in step (b) to be of possible future use from the system memory in preparation for transfer to the GPU memory; and
(d) transfer according to a scheduling protocol at least some of the pre-loaded blocks to the GPU memory prior to the MPR plane moving into intersection with those blocks.

To increase rendering speed the GPU is operable to generate a series of MPR images of a region of the volume data which correspond to a hierarchy of different slab MPR thicknesses, and to store the MPR images in the GPU memory. This means an MPR image having an arbitrary slab MPR thickness can be rendered by accumulating appropriate ones of the hierarchy of different slab MPR thickness images without needing to render all of the voxels within the MPR slab.

By conceptually dividing the volume data into blocks, the processing power of the GPU can be employed to render MPR images notwithstanding the modest memory available to a typical GPU. Furthermore, by scheduling the transfer of blocks which the CPU predicts are likely to be needed in the future, the effects of inconsistent performance associated with irregular bus traffic with known schemes for GPU-based rendering of medical image volume data are reduced and more rapid rendering of sequences of images can be performed.

The apparatus may be configured such that when the GPU memory allocated for storing blocks is full, blocks are overwritten in the GPU memory according to a replacement protocol having regard to the fraction of the GPU memory allocated for storing blocks which is required to store the blocks needed to render an MPR image. This approach allows, for example, a least recently used replacement protocol to be used when it would be most efficient to do so, but provides for switching to another replacement protocol (such as a most recently used replacement protocol, for example) when the least recently used protocol would cause thrashing because there is not enough room in the GPU memory allocated for storing blocks to efficiently handle the number of blocks needed for an image being rendered.

Another way to avoid thrashing is to configure the GPU to process the blocks needed to render alternate MPR images to be displayed in a sequence in alternating forward and reverse series order.

The CPU may be operable to assemble the blocks of voxels comprising the volume data to be transferred to the GPU memory as 3D textures. This provides the GPU with access to the voxel data comprising blocks which the GPU can process in an efficient manner.

The blocks of voxels comprising the volume data may be arranged on an irregular grid, such as a staggered grid. This arrangement can help to reduce variability in bus traffic because it reduces the likelihood that many new blocks will need to be uploaded simultaneously to the GPU memory. This can happen if blocks are arranged on a regular grid and an MPR slab progressing through the volume data to generate a cine crosses a boundary of the regular arrangement of blocks.

The blocks of voxels comprising the volume data need not be specified in the system memory but can instead be defined by the CPU at the time they are retrieved. By generating blocks "on the fly" in this way, it is not necessary to reorder the volume data in system memory. Furthermore, the sizes, shapes and configurations of the blocks can be dynamically chosen in accordance with prevailing conditions.

The apparatus may further include a display for displaying a rendered MPR image to a user. Alternatively, the rendered image may be stored for later retrieval.

The apparatus may further be operable to render the sequence of MPR images for display to a user at a controlled rate. For example, a rate that corresponds to a progression through the volume data at constant speed. The apparatus may further be operable to render successive images in the sequence of images from corresponding successive MPR slabs which overlap one another by a significant amount, for example, by greater than 50% of their thickness, e.g. greater than 60% or 70%, more preferably by a still higher amount, such as 80%, 90% or 95% so that the visual impression of the user is one of the slab gradually progressing through the volume, rather than jumping from one slice to another. This mode of use differs from the conventional approach of moving the slab between frames by a distance equal to or only slightly less than the slab thickness (e.g. with one sample spacing overlap). A GPU based system lends itself to the proposed mode of use in that there is only a low additional cost to the system when progressing in increments of a small fraction of the slab thickness in view of the fact that a large proportion of the slices making up the slab can be cached or otherwise stored in memory on the GPU.

According to a second aspect of the invention there is provided a method of rendering a sequence of multiplanar reformatting, MPR, images from a set of volume data defined by an MPR plane moving through the volume data, on an apparatus comprising a central processing unit, CPU, coupled to a system memory storing the volume data, and a graphics processing unit (GPU) coupled to a GPU memory and the CPU, the method comprising:
(a) notionally dividing the set of volume data into a plurality of blocks of voxels according to a geometrical construct;
(b) predicting from current and/or previous positions of the MPR plane which blocks of the volume data may be required for display at a future time when the MPR plane has moved;
(c) pre-loading blocks predicted in step (b) to be of possible future use from the system memory by retrieving them from system memory and queuing them in preparation for transfer to the GPU memory; and
(d) transferring according to a scheduling protocol at least some of the pre-loaded blocks to the GPU memory prior to the MPR plane moving into intersection with those blocks, characterised by
(e) generating a series of MPR images of a region of the volume data by the GPU, the series of MPR images corresponding to a hierarchy of different slab MPR thicknesses and storing the series of MPR images in the GPU memory, and rendering a desired MPR of the region of the volume data having an arbitrary slab MPR thickness image by accumulating appropriate ones of the hierarchy of different slab MPR thickness images.

According to a third aspect of the invention there is provided a computer program product comprising machine readable instructions for implementing the method of the second aspect of the invention.

The computer program product according to the third aspect of the invention may comprise a computer program on a carrier medium, for example, a storage medium or a transmissions medium.

According to a fourth aspect of the invention there is provided a computer configured to perform the method of the second aspect of the invention.

The method may also be applied for rendering cross-sectional images of volume data, including cross-sections with thickness, comprising:
defining volume data to be imaged, plane location and orientation parameters, optionally also one or more of thickness parameters, sample density, projection mode parameters, and display parameters;
dividing the volume data into blocks;
transferring said blocks to a graphics processor on demand based on the geometric relationship between the blocks and the cross section to be rendered; and
rendering the cross sectional image using the graphics processor.

The dividing can be viewed as a conceptual subdivision of the whole volume into blocks and individual blocks of data are gathered or created on demand between the dividing and transferring.

A cache of volume data blocks can be maintained on the graphics processor to accelerate rendering of subsequent cross-sectional images.

The transferring may involve a scheduling algorithm to transfer blocks to the graphics processor ahead of the time when they are needed.

The method can be applied to rendering a sequence of cross sectional images based on parallel planes, wherein the scheduling algorithm is based on the linear separation between the cross sectional planes.

The scheduling algorithm can also be based on a desired temporal interval between images. The scheduling algorithm can also include consideration of the communication link through which blocks will be transmitted to the graphics processor and be designed so as to avoid saturating the communication link. The method can be applied to rendering a sequence of cross sectional images based on radial planes that share a common axis, wherein the scheduling algorithm is based on the angular separation between the cross sectional planes. The scheduling algorithm can be based on a desired temporal interval between images. The scheduling algorithm can also include consideration of the communication link through which blocks will be transmitted to the graphics processor and be designed so as to avoid saturating the communication link. The method can be applied to rendering a sequence of cross sectional images that have spatial locality but a complex spatial relationship, wherein the scheduling algorithm is based on an estimate of the separation between the cross sectional planes. The complex spatial relationship can be based on successive planes perpendicular to a curve. The scheduling algorithm can also be based on a desired temporal interval between images. The scheduling algorithm can also include consideration of the communication link through which blocks will be transmitted to the graphics processor and is designed so as to avoid saturating the communication link.

The scheduling algorithm can be the sole arbiter of when blocks of volume data enter and leave the cache.

The scheduling algorithm can add blocks to the cache and a Least Recently Used (LRU) strategy is used to clear blocks from the cache. In conditions wherein the working set of data blocks is equal to or larger than the size of the cache, a Most Recently Used (MRU) replacement strategy is used instead.

The rendering algorithm can be designed to access blocks of volume data in an order that does not result in pathological cache performance when the working set exceeds the cache size. The block access order can be palindromic, in other words blocks are accessed in alternating increasing and decreasing passes, or an approximation thereof.

The method can be applied to the rendering of a series of cross sectional images with thickness, and further comprise: maintaining a cache of cross sectional images that constitute sampling planes of the cross sectional region, and/or accumulated subsets of such images; and creating cross sectional images with thickness by accumulating an appropriate selection of cached images and if necessary additional cross-sectional images. The image cache may contain cross sectional images. The image cache may contain a hierarchy of accumulated images where level 0 of the hierarchy is cross sectional images, level 1 is an accumulation of every K images, level 2 is an accumulation of every K² images, and so forth. The lowest levels of the hierarchy can be elided wholly or in part, wherein in the latter case the lowest levels of the hierarchy are elided except close to the planes that delimit the cross sectional zone.

The accumulation mode may be maximum, maximum of pixels excluding those with a predefined value or falling within a predefined value range, minimum, minimum of pixels excluding those with a predefined value or falling within a predefined value range, average, average of pixels excluding those with a predefined value or falling within a predefined value range, inverse exponential sum, inverse exponential sum of pixels excluding those with a predefined value or falling within a predefined value range, opacity-based volume rendering, or some other scheme.

The method may be applied to the rendering of a sequence of cross sectional images with thickness wherein there is substantial overlap between successive positions of the cross-sectional zone, such that the majority of image data required for a new image is present in the cache.

The method may be applied to the rendering of a sequence of cross sectional images with thickness wherein there is substantial overlap between successive positions of the cross-sectional zone, such that rendering a new image requires at most O(log(N)) image accumulations and at most O(log(N)) cross sectional image renderings, where N is the thickness of the cross sectional zone.

The invention may be implemented in a system for rendering a sequence of cross-sectional images with thickness incorporating a feedback loop so that the cross-sectional zone being rendered can advance through the volume at a predetermined rate of millimeters per second.

The system may incorporate a user interface that allows the user to set the desired rate of progression through the volume millimeters per second.

It will be understood that references to an MPR plane should not be construed to be limited to a flat plane, but should also include an arbitrary shape of plane. For example, non-flat planes are commonly used in curved MPR.

### BRIEF DESCRIPTION OF THE DRAWINGS

For a better understanding of the invention and to show how the same may be carried into effect reference is now made by way of example to the accompanying drawings in which:
Figure 1 shows a generic magnetic resonance scanner for generating volume data;
Figure 2 schematically shows a general purpose computer system for processing volume data to generate two dimensional images in accordance with an embodiment of the invention;
Figure 3 schematically shows some of the features of the computer system of in Figure 2 in more detail;
Figures 4a and 4b show a flow diagram schematically representing a method of processing volume data to generate two dimensional images using the computer system of Figures 2 and 3 in accordance with an embodiment of the invention;
Figure 5 schematically shows a region of space represented by volume data;
Figures 6a to 6c schematically show section views of example block gridding patterns that may be used in embodiments of the invention; and
Figure 7 shows an example computer network which can be used in conjunction with embodiments of the invention.

### DETAILED DESCRIPTION

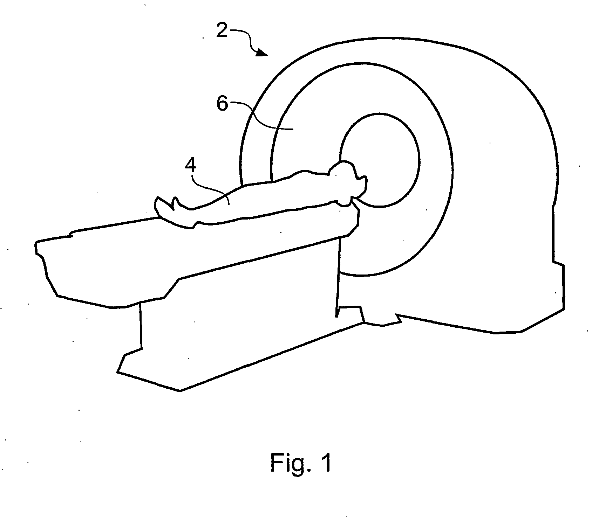

Figure 1 is a schematic perspective view of a generic MR scanner 2 for obtaining a 3D scan of a region of a patient 4. An anatomical feature of interest (in this case a head) is placed within a circular opening 6 of the MR scanner 2 and a series of image slices through the patient is taken. Raw image data are derived from the MR scanner and could comprise a collection of one thousand 2D 512x512 data subsets, for example. These data subsets, each representing a slice of the region of the patient being studied, are combined to produce volume data. The volume data comprise a collection of voxels each of which corresponds to a pixel in one of the slices. Thus the volume data are a 3D representation of the feature imaged and various user-selected 2D projections (output images) of the 3D representation can be displayed (typically on a computer monitor).

Different imaging modalities (e.g. CT, MR, PET, ultrasound) typically provide different image resolutions (i.e. voxel size), and the overall size of the volume imaged will further depend on the nature of the study. However, in the following description, by way of concrete example it will be assumed that the volume data comprise an array of 512x512x1024 16-bit voxels arranged on a regular Cartesian grid defined by *x*-, *y-*and *z*-axes, with the voxels being spaced by 0.5 mm along each axis. This corresponds to an overall imaged volume of around 25cm x 25cm x 50cm, for example so as to encompass a human head. As is conventional, the volume data are aligned with transverse, sagittal and coronal planes. The *xy*-axes are in a transverse plane, the *xz-*axes are in a coronal plane and the *yz*-axes are in a sagittal plane.

As noted above, a common technique for generating 2D output images from volume data is known as multi planar reformatting (MPR). MPR is a technique for presenting planar cross-sectional views through volume data to allow viewing of the data in any planar orientation. In zero thickness, or plane, MPR, output images are generated by sampling (typically involving interpolation) the volume data at locations corresponding to pixels in an output image plane passing through the volume data at a desired orientation and position. The specific mathematical processing applied to the volume data in order to generate such 2D images is well known and not described here.

A related form of MPR is known as MPR with thickness, or slab MPR. Slab MPR is often used where volume data are obtained on a grid which is denser than the image resolution required to be viewed by a user, to reduce noise, or to improve perception of anatomical structures in the data. In slab MPR, a planar slab of the volume data is identified which is parallel to the desired output image and which extends over a finite thickness in the vicinity of and perpendicular to the output image plane, i.e. along a viewing direction. The output image is obtained by collapsing this planar slab along the viewing direction according to a desired algorithm. Common collapse algorithms include determining the maximum, minimum or average signal value occurring for all voxels in the planar slab which project onto a single pixel in the output image. This signal value is then taken as the signal to be represented in the output image for that pixel. As with plane MPR, the mathematical processing applied to the volume data in order to generate slab MPR images is well known and not described here.

As previously noted, a common desire when studying medical image volume data is to view a series of parallel MPR images (which may be plane MPR or slab MPR images) in succession, for example to give the impression of an image slice moving through the volume data or of an image slab covering successive adjacent and/or overlapping zones of the anatomy. By presenting a cine of MPR images to a suitably trained user in this way, the user can form an accurate mental image of the object represented by the volume data.

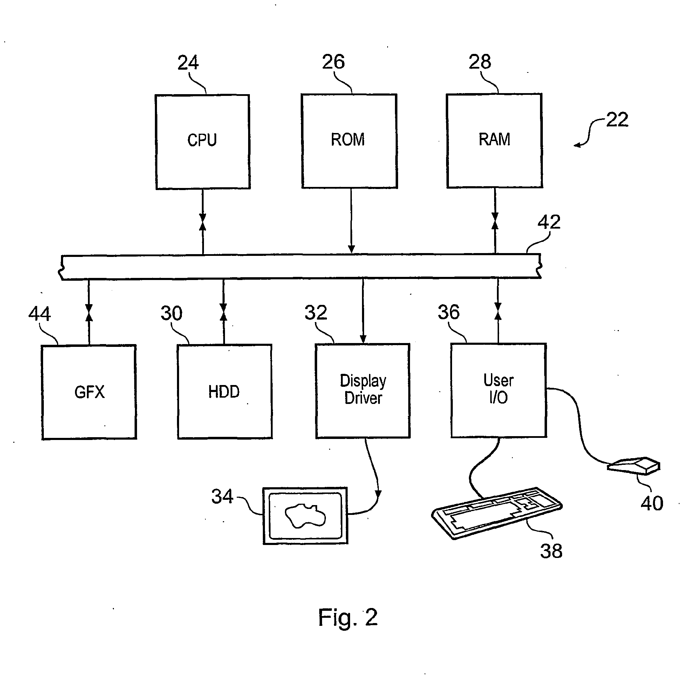

Figure 2 schematically illustrates a general purpose computer system 22 configured to perform processing of volume data to generate a cine of two dimensional images in accordance with an embodiment of the invention. The computer 22 includes a central processing unit (CPU) 24, a read only memory (ROM) 26, a random access memory (RAM) 28, a hard disk drive 30, a display driver 32 and display 34 and a user input/output (IO) circuit 36 with a keyboard 38 and mouse 40. These devices are connected via a common bus 42. The computer 22 also includes a graphics card 44 connected via the common bus 42. In this example, the graphics card is a Radeon X800XT visual processing unit manufactured by ATI Technologies Inc., Ontario Canada. The graphics card includes a graphics processing unit (GPU) and random access memory tightly coupled to the GPU (GPU memory) (not shown in Figure 2).

The CPU 24 may execute program instructions stored within the ROM 26, the RAM 28 or the hard disk drive 30 to carry out processing of signal values associated with voxels of volume data that may be stored within the RAM 28 or the hard disk drive 30. The RAM 28 and hard disk drive 30 are collectively referred to as the system memory. The GPU may also execute program instructions to carry out processing of volume data passed to it from the CPU.

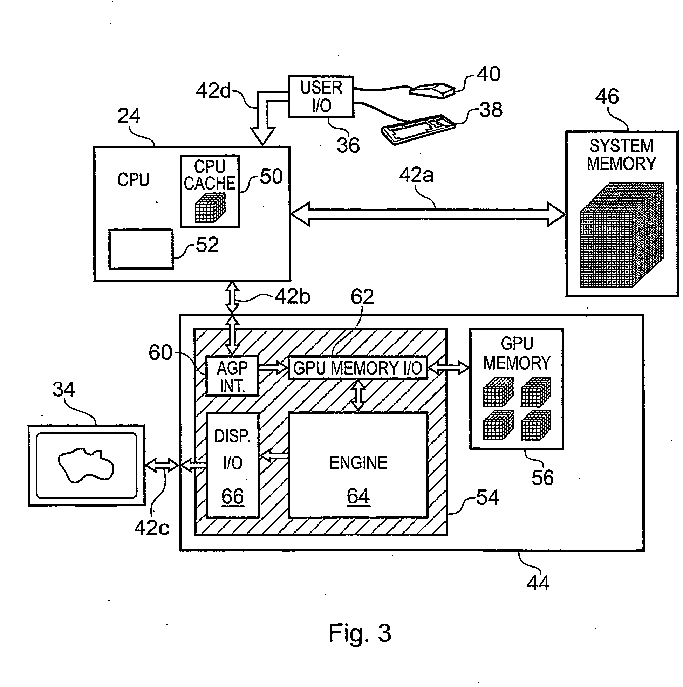

Figure 3 schematically shows some of the features of the computer system shown in Figure 2 in more detail. The RAM 28 and hard disk drive 30 are shown collectively in Figure 3 as a system memory 46. Volume data 48 obtained from the MR scanner 2 shown in Figure 1 is stored in the system memory as shown schematically in the figure.

To assist in showing the different data transfer routes between features of the computer system 22, the common bus 42 shown in Figure 2 is schematically shown in Figure 3 as a series of separate bus connections 42a-d. A first bus connection 42a connects between the system memory 46 and the CPU 24. A second bus connection 42b connects between the CPU 24 and the graphics card 44. A third bus connection 42c connects between the graphics card 44 and the display 34. A fourth bus connection 42d connects between the user I/O 36 and the CPU 24. The CPU includes a CPU cache 50 and a scheduler thread 52. The graphics card 44 includes a GPU 54 and a GPU memory 56. The GPU 54 includes circuitry for providing an accelerated graphics processing interface 60, a GPU cache I/O controller 62, a processing engine 64 and a display I/O controller 66. The processing engine 64 is designed for optimized execution of the types of program instructions typically associated with 3D rendering.

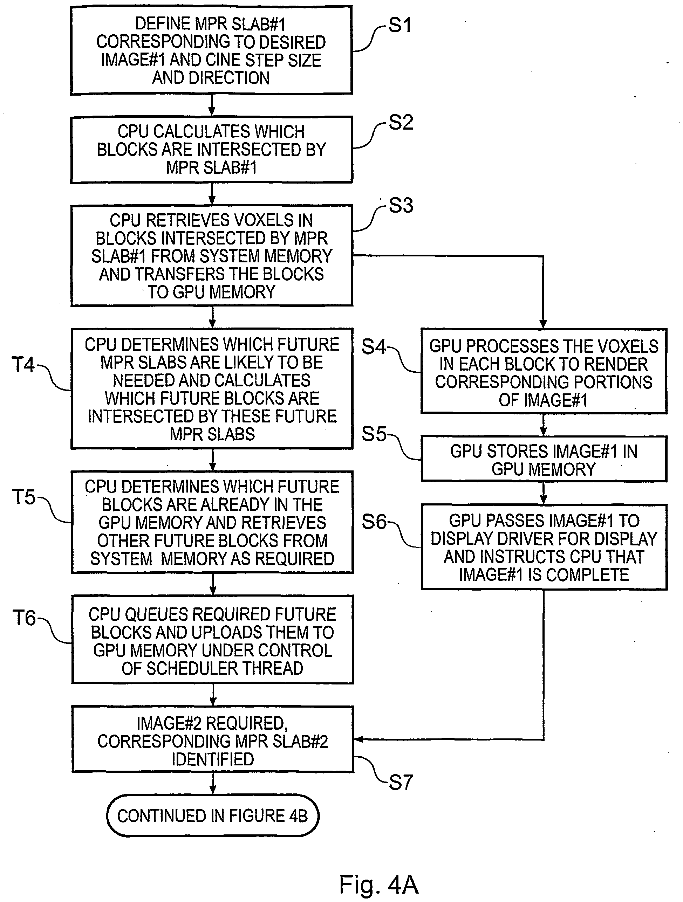

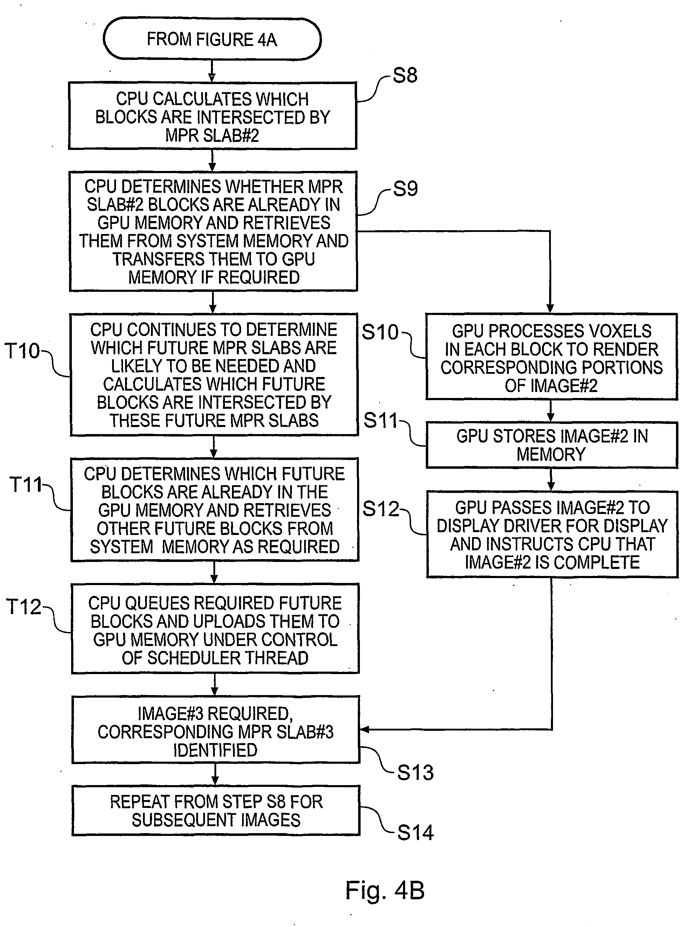

Figures 4a and 4b show a flow diagram schematically representing a method of processing volume data to generate two dimensional images using the computer system 22 of Figures 2 and 3 in accordance with an embodiment of the invention.

In Step S 1, a user wishing to view a cine defines a starting MPR slab (MPR slab#1) from which a corresponding desired initial image (image#1) is to be generated. The user also defines a step size between cine frames and a direction of travel for the cine. The user defines the required parameters using the keyboard 38 and mouse 40 in combination with a menu of options displayed on the display 34, for example using conventional techniques. In this example, MPR slab#1 has a thickness of 5mm (corresponding to ten voxels) and is arranged parallel to the x-axis and inclined at 45 degrees to both the y-and z-axes. The center of MPR slab#1 coincides with the center of the volume data 48. The defined step size between cine frames is 4mm (i.e. a step of 80% of MPR slab thickness with an overlap of 20%), and the desired direction of cine through the volume data is perpendicular to MPR slab#1 and in the positive *z*-direction.

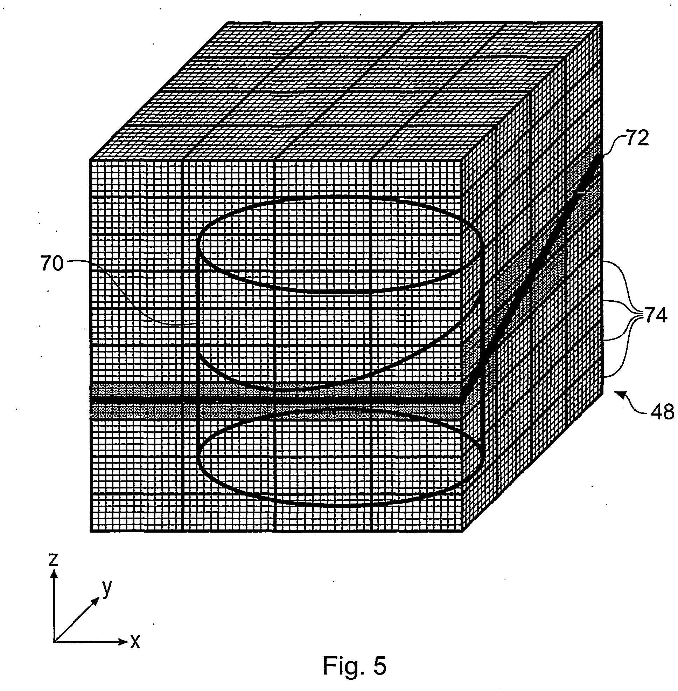

Figure 5 schematically shows the region of space represented by the volume data 48. In this example, a cylinder 70 has been imaged. The alignment of the volume data with the *x*-, *y*- and *z*-axes is as indicated in the lower left-hand corner of the figure. The position and orientation of the intersection of MPR slab#1 with the outer faces of the volume data 48 is indicated by reference numeral 72. The intersection of MPR slab#1 with the cylinder is also schematically shown. The volume data 48 are considered to be divided into a number of blocks of voxels as indicated by the heavy-line gridding in Figure 5. The light-line gridding represents the individual voxels. It will be appreciated that the gridding shown in Figure 5 is schematic and not all gridding lines corresponding to all voxels and blocks are shown in the interest of clarity.

In this example, this division of the volume data into blocks of voxels is conceptual and there is no corresponding re-ordering of the volume data in system memory. The volume data will typically be stored in system memory in linear order. In other examples, however, the volume data may be re-ordered in system memory such that voxel data associated with each individual block are linearly accessible. In general a duplication of the volume data ordered in this way (rather than an replacement) would be used as other volume data analysis tools may require a copy of the volume data to remain in linear order in system memory. While this approach can be appropriate in some circumstances, the re-ordering of volume data in system memory has costs both in terms of the time taken to perform the re-ordering and memory requirements. The scheme also lacks flexibility in that block sizes and shapes cannot be easily changed once the re-ordering has been done without repeating the re-ordering. A compromise scheme might involve duplicating only a subset of the blocks in linear order in system memory, for example those blocks in and around an MPR slab being rendered.

In the present example, the volume data are considered to be divided into cubes of 32x32x32 voxels arranged on a regular grid. It is noted that for MPR processes employing interpolation, it is helpful for voxels at the boundary of one side of each block to be duplicated in the neighboring block for each of the axes. That is to say, the blocks overlap by one voxel. This allows interpolations to be made over all of the volume space spanned by the volume data. Accordingly, a 32x32x32 block might be considered to contain 31x31x31 useful voxels and to properly span the 512x512x1024 voxel volume data set, 17x17x34 blocks will be needed. The outer "fractional" blocks can either be padded to 32x32x32 voxels, or can be smaller than the other "whole" blocks.

Once MPR slab#1 has been defined, the next task of the computer system 22 is to render and display image#1 corresponding to MPR slab#1.

In Step S2, the CPU calculates which of the conceptual blocks 72 comprising the volume data 48 are intersected by MPR slab#1. Some of these block, namely those on the visible outer faces of the volume data 48 shown in Figure 5, are identified by shading in that figure. These are the blocks that contain the data necessary to render image# 1 and which need to be passed to the graphics card 44 which is to perform the rendering.

In Step S3, the CPU retrieves the required blocks for MPR slab#1 from system memory. The CPU assembles the voxel values comprising each block in linear order following retrieval of the corresponding voxel values from system memory (where the volume data as a whole is arranged in linear order) and uploads the block data to the GPU memory via the GPU interface 60 and GPU memory I/O controller 62. The CPU conveniently assembles each block as a 3D texture in linear order for transfer to the GPU cache. Alternatively, each block may be assembled in a section of a larger 3D texture, for example using "texture atlas" techniques. In other examples, the CPU may "swizzle" the block data, or rearrange the block data in octal tree order before rendering (this could also be performed by the GPU following upload). It may or may not be practical to "swizzle" the block data depending on the efficiency of the swizzling operation. Because of locality and granularity effects in system memory, it will be more efficient when appropriate to retrieve block data from the linear order volume data in groups of at least a minimum number of consecutive bytes. Typically 32 to 128 byte groups, depending on system architecture.

In Step S4, the GPU cycles through each of the blocks which have been transferred to the GPU cache and processes the relevant voxels (i.e. those falling within MPR slab#1) in each block in order to render the output image. This can be done using conventional volume rendering algorithms and is performed by circuitry in the processing engine 64. Images may be rendered by forming a maximum intensity projection, for example. In this way, image#1 is rendered as a collage of tiles where each tile represents an image part rendered from those voxels in a given block. The GPU may commence processing the blocks to render the individual image parts as soon as the first block is transferred from the CPU to the GPU memory (i.e. Step S3 and Step S4 may execute to some extent in parallel), or alternatively, the GPU might wait until all blocks associated with MPR slab#1 have been transferred to the GPU memory. The former will generally be the quicker scheme. Following the processing of a single block by the GPU to render a corresponding part of image#1, the block data are not overwritten in the GPU memory but are maintained in case the same block is required for a later rendering. This is particularly beneficial because it will often be the case during a cine that once an image has been rendered which corresponds to one MPR slab, the next image to be rendered will correspond to an MPR slab which is adjacent to and/or overlaps to some extent with the previous one. This means that in many cases a number of the same blocks will be required to render the second image as were used to render the first. Maintaining the blocks in the GPU memory therefore reduces duplication of loading from system memory and transfer to the GPU for later rendered images.

The portion of the GPU memory allocated to the storage of blocks of volume data in this way is referred to here as GPU block cache. It will be appreciated that the GPU memory is not configured as a hardware cache since it lacks a hardware tag store and hardware means for associative addressing and replacement. Instead, the present invention maintains the GPU block cache as a software abstraction implemented on ordinary GPU memory.

As the amount of the GPU memory allocated as GPU block cache becomes full, it becomes necessary to overwrite blocks as new blocks are uploaded from the CPU. A common cache replacement protocol is to replace the least recently used entry in the cache. This is known as an LRU protocol. In the present case, this would mean that the block which has remained unused in the GPU block cache for the longest period will be overwritten. This protocol generally works efficiently because it is likely that cached blocks which were not used in the latest rendering will also not be used in the next or subsequent renderings. This is because the MPR slab used for subsequent images typically progresses steadily through the volume data during a cine. Accordingly, once a block has been used and the MPR slab has progressed though that part of the volume data, the block will not be used again unless the cine changes direction.

However, in certain circumstances, the LRU protocol can be very inefficient and heavily detrimental to performance. For example, where the working set of blocks, that is the number of blocks required to render each individual image, exceeds the number of blocks which can be stored in the GPU block cache, an LRU protocol can lead to thrashing. By way of example, suppose the GPU block cache can store N blocks and the working set is N+1 blocks. As the initial image is rendered, the first N blocks (blocks 1...N) are loaded into the block cache and the corresponding N parts of the output image rendered, block N+1 is then loaded into the GPU block cash in place of block 1 (since this is the least recently used block) and the corresponding final part of the image rendered. To render the next image, it will frequently be the case that the same N+1 working blocks will be required. Accordingly, the GPU requires block 1 to be reloaded into the block cache. It does this by overwriting block 2 (the least recently used block) and renders the first part of the next image. However, the GPU now immediately requires block 2. Block 2 is thus loaded and overwrites block 3 in the block cache. Block 3 is then loaded and overwrites block 4, and so on. Accordingly, where the working set exceeds the GPU block cache size, the LRU protocol causes all blocks to be re-loaded for each subsequent image in the cine, i.e. thrashing occurs. One way this can be avoided is by overwriting the most recently used entry in the GPU block cache. This is known as an MRU protocol. In the above example having N+1 working blocks, an MRU protocol requires only a single block to be loaded per subsequent image (assuming the MPR slab continues to intersect the same N+1 blocks). For example, when image#1 has been rendered, the GPU block cache is holding blocks 1 to N-1 and N+1 (since block N, being the most recently used block, was overwritten by block N+1). When image#2 has been rendered, the GPU block cache is now holding blocks 1 to N-2, N and N+1 (since block N-2 was overwritten by block N-1), and so on.

Accordingly, an efficient cache replacement protocol is to allow adaptive switching from an LRU protocol when the working set of blocks is fewer than the number of blocks which fit into the GPU RAM allocated as block cache to an MRU protocol when the working set exceeds the GPU block cache allocation. More generally, switching from an LRU protocol to an MRU protocol might occur when the amount of the GPU block cache required to store the working set of blocks exceeds a threshold, for example 50%, 75% or 100%, of the total GPU block cache size. Furthermore, the switch from an LRU protocol to an MRU protocol as the working set of blocks increases might occur at one threshold, while the switch from an MRU protocol to an LRU protocol as the working set of blocks decreases might occur at another lower threshold. This can help prevent frequent switching of the cache replacement protocol which might otherwise occur if a single threshold is used and the computer system is typically operating with a working set at or around this threshold.

It will be appreciated that other techniques to avoid thrashing could also be used. For example a palindromic rendering policy whereby blocks are alternately processed in forward and reverse in alternate images. For example, even-numbered images might be rendered from the bottom left corner to the top right corner of the MPR slab, whereas odd-numbered images might be rendered from top right to bottom left. Even with an LRU protocol this approach avoids thrashing.

In Step S5, the rendering of image#1 is complete and the image is stored in a part of the GPU RAM allocated to image storage. This is done so that if the same image is required again, for example, if the user stops the current cine and wants it to run backwards to review one or series of particular images of interest.

In Step S6, the GPU transfers image#1 via the GPU display I/O controller for display on the display 34. The GPU than instructs the CPU that image#1 has been completed.

During the execution of Steps S4 to S6 by the GPU in rendering image#1, the CPU executes Steps T4 to T6 in parallel.

The CPU executes Step T4 following transfer of the blocks associated with MPR slab#1 to the GPU block cache in Step S3. In Step T4, the CPU calculates which future MPR slabs are likely to be required. In the present case, i.e. where the cine corresponds to a steadily progressing image plane moving through the volume data in a known direction with a known step size, the next required MPR slab (MPR slab#2) can be readily predicted. It is similarly easy to predict the next required MPR slab for a rotating cine or a cine combing rotation and translation through the volume data. (In other cases, for example where a cine is being scrolled forwards and backwards under interactive control of a user, it may be necessary to statistically predict which is the next most likely MPR slab to be required based on previous activity by the viewer, and also to assume that MPR slabs on both sides of the present MPR slab might be required.) The CPU then calculates which blocks comprising the volume data are intersected by MPR slab#2.

In Step T5, the CPU determines which of the blocks associated with MPR slab#2 (which at this stage are referred to as future blocks in that they are under consideration only as being likely to be needed in the future) are already in the GPU block cache. In many cases, the majority of future blocks will already be in the GPU block cache. The CPU retrieves the voxel data associated with those future blocks which are not already in the GPU block cache (referred to as predicted future blocks) from system memory and assembles the blocks in the same manner as described above with respect to Step S3.

In Step T6, the CPU queues the predicted future blocks in the CPU block cache. One predicted future block is schematically shown in the CPU cache 50 of Figure 3. The predicted future blocks are then transferred to the GPU block cache under control of a scheduler thread running on the CPU. The scheduler thread is configured to determine whether there is space in the GPU block cache to receive predicted future blocks queued by the CPU in advance of their being required by the GPU for processing. If there is space, the predicted future blocks are transferred. However, it is important that the scheduler thread manages the upload of predicted future blocks appropriately. If the predicted future blocks are transferred to the GPU block cache as rapidly as possible after they become queued by the CPU, there is a danger that the transfer of predicted future blocks would choke the computer system bus and delay other traffic, such as instruction commands and geometric primitives. This is especially important where the computer system does not provide a Quality of Service (QoS) guarantee in respect of the bus between the CPU and GPU, which is most often the case. The scheduler thread must therefore be configured to transfer predicted future blocks to the GPU block cache in the most even manner possible which is consistent with ensuring as much as possible that they are in the GPU block cache by the time they are likely to be required. The scheduler thread would typically periodically re-evaluate and adjust the schedule for transferring the queued predicted future blocks and initiate the transfer of predicted future blocks to the GPU block cache. The scheduler thread may then sleep for a period, for example several milliseconds, to avoid saturating the bus with predicted future block traffic.

By way of example, the CPU might determine in Steps T4 and T5 that the current cine activity will require the transfer of:
10 predicted future blocks in 100ms;
20 further predicted future blocks in 200ms;
40 further predicted future blocks in 300ms; and
15 further predicted future blocks in 400ms.
Moreover, it might take 2ms to transfer a block to the GPU block cache and a rule may be adopted that block transfers are preferably initiated 100ms in advance. In these circumstances, the scheduler thread will instruct the immediate (i.e. at t=0ms) transfer of the first 10 predicted future blocks. This takes 20ms. The transfer of predicted future blocks is then halted for 80ms. At t=100ms, the next 20 predicted future blocks are transferred to the GPU block cache. This takes 40ms. At t=200ms, the next 40 predicted future blocks are transferred to the GPU block cache, and so on. If more than 50 predicted future blocks need to be uploaded at one time to meet a certain deadline, the scheduler thread may be configured to instigate transfer further in advance by making use of the halt time associated with a previous transfer activity.

In Step S7, the CPU, having been instructed by the GPU in Step S6 that image#1 is complete, instigates the rendering of the next image in the cine, i.e. image#2. This is done by first identifying the MPR slab corresponding to image#2, i.e. MPR slab#2. In cases where the cine represents a steady progression through the volume data, MPR slab#2 will be as predicted by the CPU in Step T4. However, in cases where the cine is responsive to user input, actual MPR slab#2 might not correspond to the most likely next MPR slab predicted in Step T4. This might be the case where the user stops the cine and instructs it to reverse, or to skip some distance, for example.

In Step S8, the CPU identifies which blocks are intersected by MPR slab#2. This is done in the same manner as described above in connection with Step S2 for MPR slab#1.

In Step S9, the CPU determines which of the blocks required to render image#2 are not already in the GPU block cache. Ideally, all of the necessary blocks will already be in the GPU block cache as a result of the predictive uploading of blocks associated with the previously executed Steps T4 to T6. If this is not the case, the CPU retrieves the voxel data associated with any required blocks which are not already in the GPU block cache from system memory and assembles the necessary blocks and transfers them to the GPU block cache in the same manner as described above with respect to Step S3.

In Steps S10 to S12 the GPU renders image#2 in the same manner as described above for Steps S4 to S6 with regard to image#1. Again, the processing in Step S10 can begin for any blocks intersected by MPR slab#2 which are already in the GPU block cache before completion of Step S9. Because the scheduler thread operating in Step T6 will have already transferred many (ideally all) of the blocks intersected by MPR slab#2 to the GPU block cache, the second image can be rendered quickly as there is reduced (ideally zero) delay associated with transferring data to the GPU block cache for subsequent processing during the rendering process.

After display of image#2 in Step 12, the GPU instructs the CPU that image#2 has been completed.

During the execution of Steps S10 to S12 by the GPU in rendering image#2, the CPU executes Steps T10 to T12 in parallel. These steps are similar to and will be understood from Steps T4 to T6 described above. During steps T4 to T6, the CPU continues to queue predicted future blocks and the scheduler thread continues to transfer them to the GPU block cache where space is available.

In Step S 13, the CPU, having been instructed by the GPU in Step S12 that image#2 is complete, instigates the rendering of the next image in the cine, i.e. image#3. This is done in the same manner as described above for Step S7 for image#2.

As indicated in Step S14, subsequent images are generated by repeating the method described above for steps S8 to S13 and T10 to T12 for image#2 for each subsequent image in the cine.

Although the above example employs a regular grid of 32x32x32 voxel blocks, it will be appreciated that other block sizes and shapes may equally be used. For example, the blocks may comprise 64x64x64 voxels, or may not have the same dimension along each axis, e.g. a regular grid of 16x16x64 voxel blocks may be used.

The most appropriate characteristic size of blocks to use will depend on a number of conflicting factors. This is because some aspects of the method benefit from using a small number of large blocks whereas other aspects benefit from using a large number of small blocks. An appropriate block size to use can thus be determined by taking into account the impact of these different factors in any particular implementation.

The main factor which favors a large number of small blocks relates to the way in which the blocks must span the volume of the MPR slab to be rendered. An array of smaller blocks will be able to more closely map to the volume of the MPR slab. This means using a large number of small blocks minimizes the amount of redundant data that needs to be transferred to the GPU block cache to render any given MPR slab. This is because there are fewer voxels not within the MPR slab itself, but which must be uploaded to the GPU block cache nonetheless because they are in a block which includes voxels which are within the MPR slab. In this regard having blocks which correspond to individual voxels would be ideal.

However, this must be balanced against those factors which favor a small number of large blocks. For example, small numbers of blocks can be preferred because the number of geometric primitives that must be processed to render a given image rises with the number of blocks (because each block is rendered separately). The computational cost of performing clipping operations also rises with the number of separate blocks to be processed. A large number of blocks also requires a large number of state changes to be made by the GPU during processing. Having larger blocks is also preferred because it is more efficient for the CPU to retrieve data from system memory in contiguous blocks (e.g. as the block x-dimension increases). It is also generally more efficient to transfer larger blocks of data through a computer system's bus. There will also be relatively less wastage associated with the need to duplicate voxels at the boundaries of neighboring blocks in order to allow interpolation over all volume space when larger blocks are employed.

There is therefore a need to make compromise between these competing factors when deciding on an appropriate size and shape of blocks. The decision will depend on factors such as the CPU and system architecture, the GPU architecture, the total number of voxels in the volume data and the orientation and thickness of the MPR plane. In the above described implementation, characteristic block dimensions on the order of 32 or 64 voxels have been found to suitable. Furthermore, appropriate block configurations (size, shape, gridding pattern etc.) need not be predefined for a given implementation but may be selected interactively according to desired cine parameters (slab thickness, orientation, step size, etc.). This may be on the basis of a predefined set of different block configurations or on the basis of specifically generated block configurations for any given desired cine activity.

It will also be appreciated that the blocks need not be arranged on a regular grid and/or need not be cuboid in shape themselves. Such non-regular arrangements can help to reduce spikes in block transfer requirements which can be significant in some cine activities.

A common cine activity involves generating a series of images parallel to two axes of the volume data so as to scan along the third axis. For example, with reference to Figure 5, a series of MPR images parallel to the *xy*-plane may be required for a series of increasing positions along the *z*-axis.

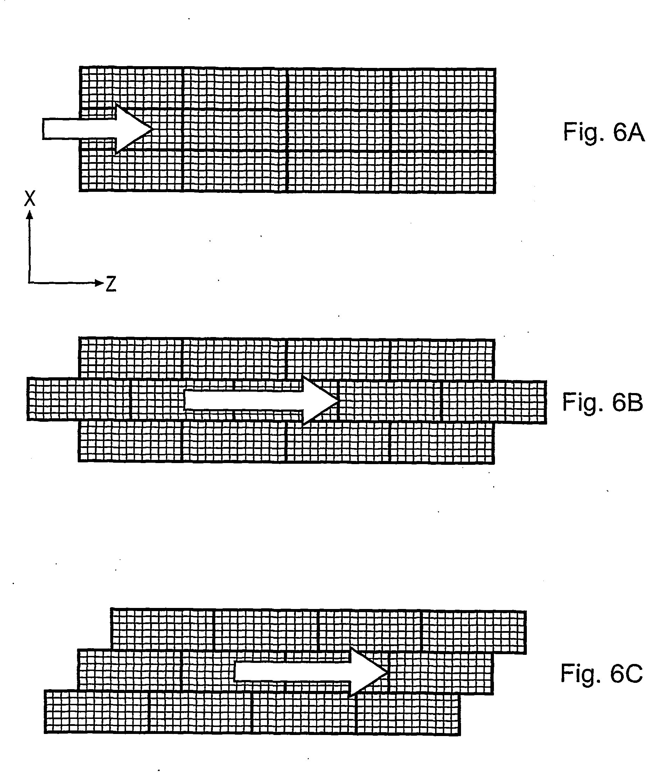

Figure 6a schematically shows a section view of an example of this cine activity taken in the *xz*-plane with blocks conceptually arranged on a regular grid. In this example the blocks are 16 voxels wide along the *x*-axis and 32 voxels wide along the *z*-axis. The cine activity effectively corresponds to a series of renderings of an MPR slab which is moving in the direction indicated by the arrow. In this example the slab is 8 voxels thick and advances at a rate of 6 voxels per cine frame and starts at the left-hand side of the figure. To assist explanation, columns of voxels will be referred to by number starting at 1 for the leftmost column. Images are rendered in a manner similar to that described above with reference to Figures 4a and 4b. The first MPR slab to be rendered spans voxel column 1 to voxel column 8. This requires the three leftmost blocks shown in Figure 6a to be transferred to the GPU block cache. The second MPR slab to be rendered extends from the voxel column 7 to voxel column 15. This again requires the three leftmost blocks shown in Figure 6a. Since these are in the GPU block cache already, the second MPR slab can be rendered without the need to transfer any blocks to the cache. The third MPR slab extends from the voxel column 13 to voxel column 21, again no further blocks need to be loaded into the cache. However, when the fifth MPR slab is reached, voxel columns 25 to 33 are required. Voxel columns 25 to 32 are present in the GPU block cache, but it is now necessary to load all of the second-to-leftmost blocks shown in Figure 6a simultaneously. This creates a sudden increase in transfer activity on the system bus. Accordingly, the data transfer requirements are very non-uniform and this can lead to jerky performance.

Figure 6b is similar to and will be understood from Figure 6a. However, in Figure 6b the blocks are arranged on an irregular (in this case staggered) grid with alternate layers of blocks are offset along the z-axis by 16 voxels. With this simple 180 degree stagger, the large spike in the number of blocks which need to be simultaneously uploaded to the GPU block cache associated with the regular gridding of blocks shown in Figure 6b is replaced by two spikes of half the size. Further smoothing of the transfer activity can be achieved with smaller staggers between layers of blocks, for example as schematically shown in Figure 6c. An irregular grid not having a uniform stagger could also be used to smooth out bus transfer activity if it is arranged such that an MPR slab progressing through the volume data does not regularly enter large numbers of new blocks simultaneously.

The above described methods can provide for efficient and fast rendering of MPR images from 3D volume data using readily available non-specialized computer hardware. Whereas in the past it has been necessary for images to be displayed as soon as they become available because it is not possible to accurately predict how long an image might take to be rendered and because some images take unduly long to render (i.e. those requiring a large number of blocks to be retrieved from system memory and transferred to the GPU block cache), with the present invention, cine images can be displayed at a regular pre-set rate corresponding to a constant speed of progression through the volume data. The above described techniques can also allow real-time cineing of medical image data at a speed which opens up the possibility for specific cine activities which have not generally been possible to implement practically with previous methods.

For example, conventional cine activities have previously been based on step sizes between cine frames which are comparable to the thickness of the MPR slabs employed to generate the images. This has been considered necessary to allow cineing to proceed at a reasonable rate to allow a user to view a complete set of volume data in a reasonable time. With slab MPR algorithms such as maximum intensity projection, large step sizes are not considered to lead to the possibility of missing something important in the data because so long as there is some overlap between the MPR slabs used to generate successive cine frames, every voxel plays a roll in generating the cine, even if the majority are never displayed. However, the approach of using large step sizes (for example having overlaps of only 20% of the thickness of the MPR slabs) nonetheless leads to the appearance of viewing a series of separate images and not a smooth movie-like scan through the volume data. However, with the faster rendering provided by the present invention it is now possible to provide real time cineing at a reasonable speed having significantly higher overlaps between the MPR slabs used to generate successive images (i.e. frames) in the cine than has previously been possible.

Cine speed can be increased further still when significantly overlapping MPR slabs are used to render successive images by using accumulated image caching as now described.

A part of the GPU RAM is allocated to accumulated image cache storage. The accumulated image cache of the GPU RAM stores a hierarchical set (i.e. a tree) of accumulated images. In principal, if unlimited GPU RAM were available, the lowest level of accumulated images in the hierarchy (level 0) would correspond to individual zero-thickness MPR planes through the volume data which are parallel to a desired cine plane. The next level (level 1) images correspond to the accumulation of a number, for example 4, of the level 0 images. The level 1 images are generated by accumulating the level 0 images using the accumulation operator used to generate the desired output images in the cine. For example, this might be the minimum, maximum or average projection (collapse) algorithm. The level 2 images correspond to the accumulation of a number of the level 1 accumulated images, for example, again 4. Level 2 images thus correspond to an accumulation of 16 level 0 images. This hierarchy may continue up to the highest level consistent with the maximum expected thickness of slab that may need to be rendered. In practice, it is unlikely that the GPU accumulated image cache will be sufficient to store all of the level 0 images. Accordingly, only level 1 accumulated images and higher might be stored in the GPU accumulated image cache.

Now, suppose an MPR slab having a thickness of 16 voxels is to be rendered for the first image in a cine using a maximum intensity projection accumulation operator. One way to render the slab would to cast a short ray from each image pixel through the volume data perpendicular to the slab and to accumulate samples along the length of the ray. A functionally equivalent method is to generate a series of zero thickness MPR planes at each of the sample locations along these rays (i.e. images which correspond to the level 0 images described above) and to accumulate these zero thickness MPR planes together. If during this processing the GPU caches the level 1 and level 2 images, they may be re-used to render a future MPR slab that significantly overlaps the present slab. For example, if the next slab overlaps the first by 50%, two of the four level 1 accumulated images can be re-used and do not need to be rerendered. As the cine progresses, the GPU accumulated image cache becomes increasingly populated with level 1 and level 2 accumulated images. When four level 2 images have been generated, they may be accumulated to form a level 3 image and so on.

As more and more accumulated images become cached, it becomes more likely that the GPU will be asked to render an image corresponding to an MPR slab which spans a region covered by the cache of accumulated images. In this case, the desired image can be generated by appropriate combining of the hierarchical set of accumulated images. For example, if the MPR slab has a thickness corresponding to the extent of 16 of the zero thickness MPR planes, and accumulated images for level 1 and above (each level corresponding to an accumulation of 4 accumulated images from the next lower level) are stored, there is a 1 in 16 chance that the MPR slab corresponds exactly to an already rendered level 2 image, and a 1 in 4 chance that it can be rendered by merely accumulating four level 1 images. For the remaining 3 in 4 cases, the image can be rendered merely by accumulating 3 level 1 images with 4 level 0 images (which will need to be generated if, as in this example case, level 0 images are not stored in the cache).

The accumulated images may be cached at the resolution of the final output display. However, because the resolution of volume data is generally less than the resolution of a final display device, it may be more appropriate to cache the images at a more modest resolution to save on storage requirements. The cached images may include blank padding parts for simplicity of operation or may alternatively be appropriately cropped to reduce storage requirements. Any regions of padding in the volume data should be carefully handled to ensure they do not contaminate accumulated images. This could be achieved with maximum and minimum projection accumulation by allocating padding pixels in rendered images a value to be ignored during accumulation. In the case of average projection, two values can be cached for each pixel in an accumulated image, one value provides a running total of valid pixels, while the other provides the number of valid pixels.

Although it will not generally be feasible to store all level 0 images in the GPU accumulated image cache, in cases where the cine progression through the volume data is regular and predictable, it can improve efficiency to maintain a number of level 0 images in the vicinity of the leading and trailing edges of the MPR slab. This is because these are the level 0 images most likely to be required when a subsequent MPR slab has advanced only a small distance from a previous MPR slab.

Cache replacement protocols for the GPU accumulated image cache may be similar to those described above for the GPU block cache. For example, an LRU protocol may be used where the working set of accumulated images is smaller than allocated GPU RAM but an MRU protocol instigated when the working set of accumulated images becomes comparable to, or exceeds, the allocated GPU RAM.

Other schemes governing cache replacement can be based on the spatial distribution of the cached images through the volume data, rather than on a temporal basis. For example, low level accumulated images which are farthest from the location of the presently rendered MPR slab might be overwritten first. This can be achieved in one example by organizing the accumulated image cache in such a way as to allocate storage for N level 0 images, N/K level 1 images (where K is the number of images accumulated together at each increase in level, i.e. 4 in the above examples) and so on. Level 0 images can then be indexed by a direct mapping of the MPR plane position according to the formula: cache_index=plane_index MOD N. This type of approach removes the need to monitor temporal usage of the accumulated images in the cache and is a robust protocol, so long as the slab thickness does not exceed N images.

Using the method of volume rendering described in relation to Figures 4a and 4b in combination with accumulated image caching, it is possible to provide real time cineing of a typical medical image volume data set with successive slab MPR images having an overlap of 80% (e.g. 5mm thick slabs advancing in 1mm steps) at a cine rate of up to 60 fps using a typical personal computer.

Methods embodying the invention will often be used within a hospital environment. In this case, the methods may usefully be integrated into a stand-alone software application, or with a Picture Archiving and Communication System (PACS). A PACS is a hospital-based computerized network which can store volume data representing diagnostic images of different types in a digital format organized in a single central archive. For example, images may be stored in the Digital Imaging and Communications in Medicine (DICOM) format. Each image has associated patient information such as the name and date of birth of the patient also stored in the archive. The archive is connected to a computer network provided with a number of workstations, so that users all around the hospital site can access and process patient data as needed. Additionally, users remote from the site may be permitted to access the archive over the Internet.

In the context of the present invention, therefore, a plurality of image volume data sets can be stored in a PACS archive, and a computer-implemented method of generating 2D output images of a chosen one of the volume data sets according to embodiments of the invention can be provided on a workstation connected to the archive via a computer network. A user such as a radiologist, a consultant, or a researcher can thereby access any volume data set from the workstation, and generate and display images using methods embodying the invention.

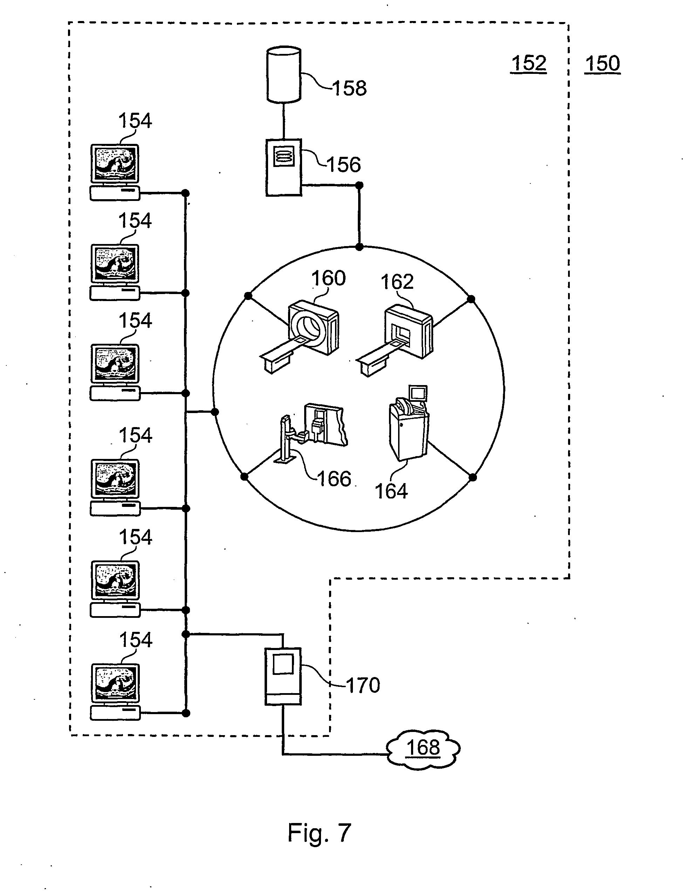

Figure 7 shows an example computer network which can be used in conjunction with embodiments of the invention. The network 150 comprises a local area network in a hospital 152. The hospital 152 is equipped with a number of workstations 154 which each have access, via the local area network, to a hospital computer server 156 having an associated storage device 158. A PACS archive is stored on the storage device 158 so that data in the archive can be accessed from any of the workstations 154. One or more of the workstations 154 has access to a graphics card and to software for computer-implementation of methods of generating images as described hereinbefore. The software may be stored locally at the or each workstation 154, or may be stored remotely and downloaded over the network 150 to a workstation 154 when needed. In other example, methods embodying the invention may be executed on the computer server with the workstations 154 operating as terminals. For example, the workstations may be configured to receive user input defining a desired volume data set and cine parameters and to display resulting images while the volume rendering itself is performed elsewhere in the system. Also, a number of medical imaging devices 160, 162, 164, 166 are connected to the hospital computer server 156. Volume data collected with the devices 160, 162, 164, 166 can be stored directly into the PACS archive on the storage device 156. Thus a cine of patient images can be generated and viewed immediately after the corresponding volume data are recorded, so that a swift diagnosis can be obtained in the event of medical emergency. The local area network is connected to the Internet 168 by a hospital Internet server 170, which allows remote access to the PACS archive. This is of use for remote accessing of the data and for transferring data between hospitals, for example, if a patient is moved, or to allow external research to be undertaken.

In the described embodiments, a computer implementation employing computer program code for storage on a data carrier or in memory can be used to control the operation of the CPU and GPU of the computer system. The computer program can be supplied on a suitable carrier medium, for example a storage medium such as solid state memory, magnetic, optical or magneto-optical disk or tape based media. Alternatively, it can be supplied on a transmission medium, for example a medium with a carrier such as a telephone, radio or optical channel.

### REFERENCES

[1] Lichtenbelt, B., Crane, R. and Naqvi, S., "Introduction to Volume Rendering", Hewlett-Packard Company, Prentice-Hall PTR, New Jersey, 1998

## Claims

1. An apparatus for rendering a sequence of multiplanar reformatting, MPR, images from a set of volume data (48) defined by an MPR plane (72) moving through the volume data, the apparatus comprising a central processing unit, CPU, (24) coupled to a system memory (46) storing the volume data, and a graphics processing unit, GPU, (44) coupled to a GPU memory (56) and the CPU, wherein the apparatus is operable to:
(a) notionally divide the set of volume data into a plurality of blocks of voxels according to a geometrical construct;
(b) predict from current and/or previous positions of the MPR plane which blocks of the volume data may be required for display at a future time when the MPR plane has moved;
(c) pre-load blocks predicted in step (b) to be of possible future use from the system memory in preparation for transfer to the GPU memory; and
(d) transfer according to a scheduling protocol at least some of the pre-loaded blocks to the GPU memory prior to the MPR plane moving into intersection with those blocks,
**characterised in that** the GPU is operable to generate a series of MPR images of a region of the volume data, the series of MPR images corresponding to a hierarchy of different slab MPR thicknesses and to store the series of MPR images in the GPU memory, such that an MPR image of the region of the volume data having an arbitrary slab MPR thickness can be rendered by accumulating appropriate ones of the hierarchy of different slab MPR thickness images.

2. An apparatus according to claim 1, wherein the GPU is operable to maintain blocks of voxels comprising the volume data in the GPU memory following rendering of an MPR image.

3. An apparatus according to claim 1 or 2, the apparatus being configured such that when the GPU memory allocated for storing blocks is full, blocks are overwritten in the GPU memory according to a replacement protocol that takes account of the fraction of the GPU memory allocated for storing blocks which is required to store the blocks needed to render an MPR image.

4. An apparatus according to claim 1, 2 or 3, wherein the GPU memory has a specified size for storing blocks and the GPU is operable to process the blocks needed to render MPR images in forward and reverse series order in alternately rendered MPR images.

5. An apparatus according to any one of the preceding claims, wherein the CPU is operable to assemble the blocks of voxels comprising the volume data to be transferred to the GPU memory as 3D textures.

6. An apparatus according to any one of the preceding claims, wherein the blocks of voxels comprising the volume data are arranged on an irregular grid.

7. An apparatus according to claim 6, wherein the blocks of voxels comprising the volume data are arranged on a staggered grid.

8. An apparatus according to any one of the preceding claims, wherein the blocks of voxels comprising the volume data are not specified in the system memory but are defined by the CPU at the time they are retrieved from the system memory.

9. An apparatus according to any one of the preceding claims, the apparatus further comprising a display for displaying a rendered MPR image.

10. An apparatus according to any one of the preceding claims, the apparatus being operable to render the sequence of MPR images for display to a user at a controlled rate.

11. An apparatus according to claim 10, wherein the controlled rate corresponds to a progression through the volume data at constant speed.

12. An apparatus according to claim 10 or 11, the apparatus being operable to render successive images from corresponding successive MPR slabs which overlap one another by more than 50% of their thickness.

13. A method of rendering a sequence of multiplanar reformatting, MPR, images from a set of volume data defined by an MPR plane moving through the volume data, on an apparatus comprising a central processing unit, CPU, (24) coupled to a system memory (46) storing the volume data, and a graphics processing unit, GPU, (44) coupled to a GPU memory (56) and the CPU, the method comprising:
(a) notionally dividing the set of volume data into a plurality of blocks of voxels according to a geometrical construct;
(b) predicting from current and/or previous positions of the MPR plane which blocks of the volume data may be required for display at a future time when the MPR plane has moved;
(c) pre-loading blocks predicted in step (b) to be of possible future use from the system memory by retrieving them from system memory and queuing them in preparation for transfer to the GPU memory; and
(d) transferring according to a scheduling protocol at least some of the pre-loaded blocks to the GPU memory prior to the MPR plane moving into intersection with those blocks, **characterised by**
(e) generating a series of MPR images of a region of the volume data by the GPU, the series of MPR images corresponding to a hierarchy of different slab MPR thicknesses and storing the series of MPR images in the GPU memory, and rendering a desired MPR image of the region of the volume data having an arbitrary slab MPR thickness by accumulating appropriate ones of the hierarchy of different slab MPR thickness images.

14. A method according to claim 13, further comprising maintaining blocks of voxels comprising the volume data in the GPU memory following rendering of an MPR image.

15. A method according to claim 13 or 14, wherein when the GPU memory allocated for storing blocks is full, blocks are overwritten in the GPU memory according to a replacement protocol having regard to the fraction of the GPU memory allocated for storing blocks which is required to store the blocks needed to render an MPR image.

16. A method according to claim 13, 14 or 15, wherein the GPU memory has a specified size for storing blocks, the method further comprising rendering the blocks in forward and reverse series order in alternately rendered MPR images

17. A method according to any one of claims 13 to 16, further comprising assembling the blocks of voxels comprising the volume data to be transferred to the GPU memory as 3D textures.

18. A method according to any one of claims 13 to 17, in which the blocks of voxels comprising the volume data are arranged on an irregular grid.

19. A method according to claim 18, in which the blocks of voxels comprising the volume data are arranged on a staggered grid.

20. A method according to any one of claims 13 to 19, in which the blocks of voxels comprising the volume data are not specified in the system memory but are defined at the time they are retrieved from the system memory.

21. A method according to any one of claims 13 to 20, the method further comprising displaying a rendered MPR image.

22. A method according to any one of claims 13 to 21, further comprising rendering the sequence of MPR images and displaying successive images of the sequence at a controlled rate.

23. A method according to claim 22, wherein the controlled rate corresponds to a progression through the volume data at a constant speed.

24. A method according to claim 22 or 23, wherein successive images are rendered from corresponding successive MPR slabs which overlap one another by at least 50% of their thickness.

25. The method of claim 13 applied to rendering cross-sectional images of volume data, including cross-sections with thickness, further comprising:
defining volume data to be imaged, plane location and orientation parameters, optionally also one or more of thickness parameters, sample density, projection mode parameters, and display parameters;
during step (d) transferring said blocks to the GPU memory on demand based on the geometric relationship between the blocks and the cross section to be rendered; and
rendering the cross sectional image using the GPU memory.

26. The method of claim 25, wherein individual blocks of voxels are gathered or created on demand between the dividing and transferring.

27. The method of claim 25 or 26, wherein a cache of volume data blocks is maintained on the GPU memory to accelerate rendering of subsequent cross-sectional images.

28. The method of claim 27, wherein the scheduling algorithm transfers pre-loaded blocks to the GPU memory ahead of the time when they are needed.

29. The method of claim 28 applied to rendering a sequence of cross sectional images based on parallel planes, wherein the scheduling algorithm is based on the linear separation between the cross sectional planes.

30. The method of claim 29, wherein the scheduling algorithm is also based on a desired temporal interval between images.

31. The method of claim 29 or 30, wherein the scheduling algorithm also includes consideration of the communication link through which blocks will be transmitted to the graphics processor and is designed so as to avoid saturating the communication link.

32. The method of claim 28 applied to rendering a sequence of cross sectional images based on radial planes that share a common axis, wherein the scheduling algorithm is based on the angular separation between the cross sectional planes.

33. The method of claim 32, wherein the scheduling algorithm is also based on a desired temporal interval between images.

34. The method of claim 33, wherein the scheduling algorithm also includes consideration of the communication link through which blocks will be transmitted to the graphics processor and is designed so as to avoid saturating the communication link.

35. The method of claim 28 applied to rendering a sequence of cross sectional images that have spatial locality but a complex spatial relationship, wherein the scheduling algorithm is based on an estimate of the separation between the cross sectional planes.

36. The method of claim 35, wherein the complex spatial relationship is based on successive planes perpendicular to a curve.

37. The method of claim 35 or 36, wherein the scheduling algorithm is also based on a desired temporal interval between images.

38. The method of claim 35, 36 or 37, wherein the scheduling algorithm also includes consideration of the communication link through which blocks will be transmitted to the graphics processor and is designed so as to avoid saturating the communication link.

39. The method of claim 28, wherein the scheduling algorithm is the sole arbiter of when blocks of volume data enter and leave the cache.

40. The method of any one of claims 28 to 39, wherein the scheduling algorithm adds blocks to the cache and a Least Recently Used, LRU, strategy is used to clear blocks from the cache.

41. The method of claim 40, wherein, in conditions wherein the working set of data blocks is equal to or larger than the size of the cache, a Most Recently Used, MRU, replacement strategy is used instead.

42. The method of claim 40 or 41, wherein the rendering algorithm is designed to access blocks of volume data in an order that does not result in pathological cache performance when the working set exceeds the cache size.

43. The method of claim 42, wherein said block access order is palindromic, in other words blocks are accessed in alternating increasing and decreasing passes, or an approximation thereof.

44. The method of claim 28 applied to the rendering of a series of cross sectional images with thickness, and further comprising:
maintaining a cache of cross sectional images that constitute sampling planes of the cross sectional region, and/or accumulated subsets of such images; and
creating cross sectional images with thickness by accumulating an appropriate selection of cached images and if necessary additional cross-sectional images.

45. The method of claim 42, wherein the image cache contains cross sectional images.

46. The method of claim 44 or 45, wherein the image cache contains a hierarchy of accumulated images where level 0 of the hierarchy is cross sectional images, level 1 is an accumulation of every K images, level 2 is an accumulation of every K² images, and so forth.

47. The method of claim 46, wherein the lowest levels of the hierarchy are elided.

48. The method of claim 46, wherein the lowest levels of the hierarchy are elided except close to the planes that delimit the cross sectional zone.

49. The method of any one of claims 44 to 48, wherein the accumulation mode is one of:
(a) maximum;
(b) maximum of pixels excluding those with a predefined value or falling within a predefined range of values.
(c) minimum;
(d) minimum of pixels excluding those with a predefined value or falling within a predefined range of values;
(e) average;
(f) average of pixels excluding those with a predefined value or falling within a predefined range of values;
(g) inverse exponential sum;
(h) inverse exponential sum of pixels excluding those with a predefined value or falling within a predefined range of values; and
(i) opacity-based volume rendering.

50. The method of any one of claims 44 to 49 applied to the rendering of a sequence of cross sectional images with thickness wherein there is substantial overlap between successive positions of the cross-sectional zone, such that the majority of image data required for a new image is present in the cache.

51. The method of claim 46 applied to the rendering of a sequence of cross sectional images with thickness wherein there is substantial overlap between successive positions of the cross-sectional zone, such that rendering a new image requires at most O(log(N)) image accumulations and at most O(log(N)) cross sectional image renderings, where N is the thickness of the cross sectional zone.

52. The method of any one of claims 34 to 51, wherein the scheduling protocol determines whether there is space in the GPU memory to receive pre-loaded blocks prior to transferring them to the GPU memory.

53. A computer program product comprising machine readable instructions for performing on a computer the method of any one of claims 13 to 52.

54. A computer program product according to claim 53 comprising a computer program on a carrier medium.

55. A computer program product according to claim 54, wherein the carrier medium is a storage medium.

56. A computer program product according to claim 54, wherein the carrier medium is a transmission medium.

57. A computer configured to perform the method of any one of claims 13 to 52.

## Patentansprüche

1. Vorrichtung zum Rendern einer Sequenz multiplanarer, rekonstruierter, MPR, Bilder aus einem Satz von Volumendaten (48), der durch eine MPR-Ebene 72, sich durch die Volumendaten bewegt, definiert ist, wobei die Vorrichtung eine mit einem die Volumendaten speichernden Speichersystem (46) verbundend zentrale Verarbeitungseinheit, CPU (24), und eine Grafikverarbeitungseinheit, GPU (44), die mit einem GPU-Speicher (56) und der CPU verbunden ist, aufweist, wobei die Vorrichtung so betreibbar ist, dass sie:
(a) theoretisch den Satz von Volumendaten in eine Mehrzahl von Blöcken von Voxeln gemäß einer geometrischen Konstruktion teilt,
(b) aus derzeitigen und/oder vorangegangenen Positionen der MPR-Ebene, vorhersagt, welche Blöcke der Volumendaten zu einem zukünftigen Zeitpunkt, wenn sich die MPR-Ebene bewegt hat, zur Darstellung benötigt werden könnten,
(c) Vorladen von Blöcken, die in Schritt (b) als zukünftig zu verwenden vorhergesagt wurden, aus dem Systemspeicher als Vorbereitung zur Übertragung an den GPU-Speicher und
(d) Übertragen mindestens eines Teils der vorgeladenen Blöcke gemäß einem Ablaufplanungsprotokoll an den GPU-Speicher bevor sich die MPR-Ebene in einen Schnitt mit diesen Blöcken bewegt,
**dadurch gekennzeichnet, dass** die GPU so betreibbar ist, dass sie eine Reihe von MPR-Bildern aus einem Bereich der Volumendaten erzeugt, wobei die Reihe von MPR-Bildern einer Hierarchie von verschiedenen MPR-Scheibendicken entspricht, und dass sie die Reihe von MPR-Daten in dem GPU-Speicher speichert, sodass ein MPR-Bild des Bereichs der Volumendaten mit einer willkürlichen MPR-Scheibendicke gerendert werden kann durch Akkumulieren passender aus der Hierarchie von Bildern mit unterschiedlichen MPR-Scheibendicken.

2. Vorrichtung nach Anspruch 1, wobei die GPU so betreibbar ist, dass sie Blöcke von Voxeln, welche die Volumendaten in dem GPU-Speicher nach einem Rendern eines MPR-Bildes aufweisen, beibehält.

3. Vorrichtung nach Anspruch 1 oder 2, wobei die Vorrichtung so eingerichtet ist, dass wenn der GPU-Speicher, der zum Speichern von Blöcke reserviert ist, voll ist, die Blöcke in dem GPU-Speicher gemäß einem Ersetzungsprotokoll, das den Bruchteil des GPU-Speichers, der zum Speichern von Blöcken reserviert ist und der benötigt wird, um die Blöcke, die zum Rendern eines MPR-Bildes benötigt werden, zu speichern, berücksichtigt, überschrieben werden.

4. Vorrichtung nach Anspruch 1, 2 oder 3, wobei der GPU-Speicher eine spezifizierte Größe zum Speichern von Blöcken aufweist und die GPU so betreibbar ist, dass sie die zum Rendern von MPR-Bildern in Vorwärts- und Rückwärtsreihenfolge in abwechselnd gerenderten MPR-Bildern benötigten Blöcke verarbeitet.

5. Vorrichtung nach einem der vorhergehenden Ansprüche, wobei die CPU so betreibbar ist, dass sie die Blöcke von Voxeln, die die an den GPU-Speicher zu übertragenden Volumendaten aufweisen, als 3D-Strukturen zusammensetzt.

6. Vorrichtung nach einem der vorhergehenden Ansprüche, wobei die Blöcke von Voxeln, die die Volumendaten aufweisen, in einem unregelmäßigen Gitter angeordnet sind.

7. Vorrichtung nach Anspruch 6, wobei die Blöcke von Voxeln, die die Volumendaten aufweisen, in einem verschobenen Gitter angeordnet sind.

8. Vorrichtung nach einem der vorhergehenden Ansprüche, wobei die Blöcke von Voxeln, die die Volumendaten aufweisen, nicht in dem Systemspeicher spezifiziert sind, sondern durch die CPU zu dem Zeitpunkt gebildet werden, zu dem sie aus dem Systemspeicher abgefragt werden.

9. Vorrichtung nach einem der vorhergehenden Ansprüche, wobei die Vorrichtung darüber hinaus eine Anzeige zum Anzeigen eines gerenderten MPR-Bildes aufweist.

10. Vorrichtung nach einem der vorhergehenden Ansprüche, wobei die Vorrichtung so betreibbar ist, dass sie die Sequenz von MPR-Bildern zum Anzeigen für einen Benutzer mit einer gesteuerten Rate rendert.

11. Vorrichtung nach Anspruch 10, wobei die gesteuerte Rate einem Voranschreiten durch die Volumendaten mit konstanter Geschwindigkeit entspricht.

12. Vorrichtung nach Anspruch 10 oder 11, wobei die Vorrichtung so betreibbar ist, dass sie aufeinanderfolgende Bilder aus entsprechenden aufeinanderfolgenden MPR-Scheiben, die einander um mehr als 50 % ihrer Dicke überlappen, rendert.

13. Verfahren zum Rendern einer Sequenz von multiplanar rekonstruierten, MPR, Bildern aus einem Satz von Volumendaten, der durch eine sich durch die Volumendaten bewegende MPR-Ebene definiert ist, in einer Vorrichtung mit einer zentralen Verarbeitungseinheit, CPU (24), die mit einem die Volumendaten speichernden Systemspeicher (46) und einer Grafikeinheit, GPU (44), die mit einem GPU-Speicher (56) und der GPU verbunden ist, verbunden ist, wobei das Verfahren umfasst:
(a) theoretisches Teilen des Satzes von Volumendaten in eine Mehrzahl von Blöcken von Voxeln gemäß einer geometrischen Konstruktion,
(b) Vorhersagen aus derzeitigen und/oder zukünftigen Positionen der MPR-Ebene, welche Blöcke der Volumendaten zur Darstellung zu einem zukünftigen Zeitpunkt, wenn die MPR-Ebene bewegt wurde, erforderlich sein könnten,
(c) Vorladen von in Schritt (b) als zukünftig nützlich vorhergesagten Blöcken aus dem Systemspeicher durch Abrufen dieser aus dem Systemspeicher und Queuen dieser in Vorbereitung auf eine Übertragung an den GPU-Speicher und
(d) Übertragen mindestens eines Teils der vorgeladenen Blöcke gemäß einem Ablaufplanprotokoll an den GPU-Speicher, bevor sich die MPR-Ebene in einen Schnitt mit diesen Blöcken bewegt, **gekennzeichnet durch**
(e) Erzeugen einer Reihe von MPR-Bildern eines Bereichs der Volumendaten **durch** die GPU, wobei die Reihe von MPR-Bildern einer Hierarchie von verschiedenen MPR-Scheibendicken entspricht, und Speichern der Reihe von MPR-Bildern in dem GPU-Speichern und Rendern eines gewünschten MPR-Bildes des Bereichs der Volumendaten mit einer willkürlichen MPR-Scheibendicke **durch** Akkumulieren passender aus der Hierarchie von Bildern mit verschiedener MPR-Scheibendicke.

14. Verfahren nach Anspruch 13 darüber hinaus mit Beibehalten von Blöcken von Voxeln, die die Volumendaten in dem GPU-Speicher aufweise, nach dem Rendern eines MPR-Bildes.

15. Verfahren nach Anspruch 13 oder 14, wobei wenn der GPU-Speicher, der zum Speichern von Blöcken reserviert ist, voll ist, Blöcke in dem GPU-Speicher gemäß einem Ersetzungsprotokoll, das den Anteil des GPU-Speichers, der zum Speichern von Blöcken reserviert ist, die benötigt werden, um die Blöcke zu speichern, die benötigt werden, um ein MPR-Bild zu sendern, berücksichtigt, überschrieben werden.

16. Verfahren nach Anspruch 13, 14 oder 15, wobei der GPU-Speicher eine speifizierte Größe zum Speichern von Blöcken aufweist, wobei das Verfahren darüber hinaus ein Rendern der Blöcke in Vorwärts- und Rückwärtsreihenfolge in abwechselnd geränderten MPR-Bildern aufweist.

17. Verfahren nach einem der Ansprüche 13 bis 16 darüber hinaus mit Zusammensetzen der Blöcke von Voxeln, die die an den GPU-Speicher zu übertragenden Volumendaten aufweisen, zu 3D-Strukturen.

18. Verfahren nach einem der Ansprüche 13 bis 17, in dem die Blöcke von Voxeln, die die Volumendaten aufweisen, in einem unregelmäßigen Gitter angeordnet sind.

19. Verfahren nach Anspruch 18, in dem die Blöcke von Voxeln, die die Volumendaten aufweisen, in einem verschobenen Gitter angeordnet sind.

20. Verfahren nach einem der Ansprüche 13 bis 19, in dem die Blöcke von Voxeln mit den Volumendaten nicht in dem Systemspeicher spezifiziert sind, sondern zu der Zeit definiert werden, zu der sie aus dem Systemspeicher abgerufen werden.

21. Verfahren nach einem der Ansprüche 13 bis 20, wobei das Verfahren darüber hinaus ein Anzeigen eines gerenderten MPR-Bildes umfasst.

22. Verfahren nach einem der Ansprüche 13 bis 21 darüber hinaus mit Rendern der Reihe von MPR-Bildern und Anzeigen aufeinanderfolgender Bilder der Reihe mit einer gesteuerten Rate.

23. Verfahren nach Anspruch 22, wobei die gesteuerte Rate dem Voranschreiten durch die Volumendaten mit einer konstanten Geschwindigkeit entspricht.

24. Verfahren nach Anspruch 22 oder 23, wobei aufeinanderfolgende Bilder aus entsprechend aufeinanderfolgenden MPR-Scheiben, die einander um mindestens 50 % ihrer Dicke überlappen, gerendert werden.

25. Verfahren nach Anspruch 13, das auf ein Rendern von Querschnittsbildern von Volumendaten angewandt wird, einschließlich Querschnitten mit Dicken, darüber hinaus mit:
Definieren von abzubildenden Volumendaten, einem Ort der Ebene und Orientierungsparametern, optional auch einem oder mehreren Dickenparametern, Probendichte, Projektionsmodusparametern und Anzeigeparametern,
während Schritt (d) auf Nachfrage Übertragen der Blöcke an den GPU-Speicher basierend auf der geometrischen Beziehung zwischen den Blöcken und dem zu rendernden Querschnitt und
Rendern des Querschmittsbildes, wobei der GPU-Speicher verwendet wird.

26. Verfahren nach Anspruch 25, wobei zwischen dem Teilen und Übertragen individuelle Blöcke von Voxeln gesammelt oder auf Nachfrage erzeugt werden.

27. Verfahren nach Anspruch 25 oder 26, wobei ein Cache von Volumendatenblöcken in dem GPU-Speicher unterhalten wird, um ein Rändern nachfolgender Querschnittsbilder zu beschleunigen.

28. Verfahren nach Anspruch 27, wobei der Ablaufplanungsalgorithmus vorgeladene Blöcke vor dem Zeitpunkt, zu dem sie benötigt werden, in den GPU-Speicher überträgt.

29. Verfahren nach Anspruch 28 angewendet auf das Rendern einer Reihe von Querschnittsbitdern basierend auf parallelen Ebenen, wobei der Ablaufplanungsaigorithmus auf der linearen Trennung zwischen den Querschnittsebenen basiert.

30. Verfahren nach Anspruch 29, wobei der Ablaufplanungsalgorithmus auch auf einem gewünschten zeitlichen Intervall zwischen Bildern basiert.

31. Verfahren nach Anspruch 29 oder 30, wobei der Ablaufplanungsalgorithmus auch eine Berücksichtigung der Kommunikationsverbindung, über die die Blöcke an den Grafikprozessor übertragen werden, umfasst und so gestaltet ist, dass er eine Sättigung der Kommunikationsverbindung vermeidet.

32. Verfahren nach Anspruch 28 angewendet auf ein Rendern einer Reihe von Querschnittsbildern basierend auf radialen Ebenen, die eine gemeinsame Achse teilen, wobei der Ablaufplanungsalgorithmus auf der Winkelseparation zwischen den Querschnittsebenen basiert.

33. Verfahren nach Anspruch 32, wobei der Ablaufplanungsalgorithmus auch auf einem gewünschten zeitlichen intervall zwischen Bildern basiert.

34. Verfahren nach Anspruch 33, wobei der Ablaufplanungsalgorithmus auch eine Berücksichtigung der Kommunikationsverbindung, durch die Blöcke an den Grafikprozessor übertragen werden, berücksichtigt und so gestaltet ist, dass er eine Sättigung der Kommunikationsverbindung vermeidet.

35. Verfahren nach Anspruch 28 angewendet auf ein Rendern einer Reihe von Querschnittsbildern, die eine räumliche Lokalisierung aufweisen, jedoch eine komplexe räumliche Beziehung haben, wobei der Ablaufplanungsalgorithmus auf einer Schätzung der Separation zwischen den Querschnittsebenen basiert.

36. Verfahren nach Anspruch 35, wobei die komplexe räumliche Beziehung auf aufeinanderfolgenden Ebenen senkrecht zu einer Kurve basiert.

37. Verfahren nach Anspruch 35 oder 36, wobei der Abiaufplanungsaigorithmus auch auf einem gewünschten zeitlichen Intervall zwischen Bildern beruht.

38. Verfahren nach Anspruch 35, 36 oder 37, wobei der Ablaufplanungsalgorithmus auch eine Berücksichtigung der Kommunikationsverbindung, durch die Blöcke an den Grafikprozessor übertragen werden, umfasst und so gestaltet ist, dass er eine Sättigung der Kommunikationsverbindung vermeidet.

39. Verfahren nach Anspruch 38, wobei der Ablaufplanungsalgorithmus der einzige Arbiter ist, wenn Blöcke von Volumendaten in den Cache eintreten und ihn verlassen.

40. Verfahren nach einem der Ansprüche 28 bis 39, wobei der Ablaufplanungsalgorithmus dem Cache Blöcke hinzufügt und eine Least Recently Used-, LRU-, Strategie verwendet wird, um Blöcke aus dem Cache zu Iöschen.

41. Verfahren nach Anspruch 40, wobei in Zuständen, in denen der Arbeitssatz von Datenblöcken gleich oder größer als die Größe des Cache ist, stattdessen eine Most Recently Used-, MRU-, Ersetzungsstrategie verwendet wird.

42. Verfahren nach Anspruch 40 oder 41, wobei der Renderungsatgorithmus so gestaltet ist, dass er auf Blöcke von Volumendaten in einer Reihenfolge zugreift, die nicht zu einer pathologischen Cache-Leistungsfähigkeit führt, wenn der Arbeitssatz die Sache-Größe übersteigt.

43. Verfahren nach Anspruch 42, wobei die Blockzugriffsreihenfolge palindromisch ist, mit anderen Worten wird auf Blöcke in abwechselnd zunehmenden und abnehmenden Durchgängen zugegriffen oder in einer Näherung davon.

44. Verfahren nach Anspruch 28 angewandt auf das Rendern einer Reihe von Querschnittsbitdern mit Dicken und darüber hinaus mit:
Beibehalten eines Cache von Querschnittsbildern, die Abtastebene des Querschnittbereichs bilden und/oder Akkumulieren von Untersätzen solcher Bilder und
Erzeugen von Querschnittsbildern mit Dicken durch Akkumulieren einer passenden Auswahl von gecacheten Bildern und falls notwendig zusätzliche Querschnittsbildern.

45. Verfahren nach Anspruch 42, wobei der Bildcache Querschnittsbilder enthält.

46. Verfahren nach Anspruch 44 oder 45, wobei der Bildcache eine Hierarchie von akkumulierten Bildern enthält, wobei Niveau 0 der Hierarchie Querschnittsbilder sind, Niveau 1 eine Akkumulation jeder K-Bilder ist, Niveau 2 eine Akkumulation jeder K2-Bilder ist, usw.

47. Verfahren nach Anspruch 46, wobei die untersten Niveaus der Hierarchie ausgelassen werden.

48. Verfahren nach Anspruch 46, wobei die untersten Niveaus der Hierarchie ausgelassen werden außer nahe den Ebenen, die die Querschnittszone begrenzen.

49. Verfahren nach einem der Ansprüche 44 bis 48, wobei der Akkumulationsmodus einer ist von:
(a) Maximum,
(b) Maximum von Pixeln ausschließlich denjenigen mit einem vorbestimmten Wert oder die in einen vorbestimmten Bereich von Werten fallen,
(c) Minimum,
(d) Minimum von Pixeln ausschließlich denjenigen mit einem vorbestimmten Wert oder die in einen vorbestimmten Bereich von Werten fallen,
(e) Durchschnitt,
(f) Durchschnitt von Pixeln ausschließlich denjenigen mit einem vorbestimmten Wert oder die in einen vorbestimmten Bereich von Werten fallen,
(g) inverse exponentielle Summe,
(h) inverse exponentielle Summe von Pixeln ausschließlich denjenigen mit einem vorbestimmten Wert oder die in einen vorbestimmten Bereich von Werten fallen und
(i) undurchsichtigkeitsbasiertes Volumenrendern.

50. Verfahren nach einem der Ansprüche 44 bis 49 angewandt auf das Rendern einer Reihe von Querschnittsbildern mit Dicken, wobei es einen wesentlichen Überlapp zwischen aufeinanderfolgenden Positionen der Querschnittszone gibt, sodass die Mehrheit von Bilddaten, die für ein neues Bild benötigt werden, in dem Cache vorhanden sind.

51. Verfahren nach Anspruch 46 angewandt auf das Rendern einer Reihe von Querschnittsbildern mit Dicken, wobei es einen wesentlichen Überlapp zwischen aufeinanderfolgenden Positionen der Querschnittszone gibt, sodass ein Rendern eines neuen Bildes mindestens O(log(N)) Bildakkumulationen erfordert und mindestens O(log(N)) Querschnittsbiiderrenderungen, wobei N die Dicke der Querschnittszone ist.

52. Verfahren nach einem der Ansprüche 34 bis 51, wobei das Ablaufplanungsprotokoll bestimmt, ob es Platz in dem GPU-Speicher gibt, um vorgeladene Blöcke zu empfangen bevor sie an den GPU-Speicher übertragen werden.

53. Computerprogrammprodukt mit maschineniesbaren Befehlen zum Ausführen des Verfahrens nach einem der Ansprüche 13 bis 52 auf einem Computer.

54. Computerprogrammprodukt nach Anspruch 53 mit einem Computerprogramm auf einem Trägermedium.

55. Computerprogranmprodukt nach Anspruch 54, wobei das Trägermedium ein Speichermedium ist.

56. Conputerprogrammprodukt nach Anspruch 54, wobei das Trägermedium ein Übertragungsmedium ist.

57. Computer, der so eingerichtet ist, dass er das Verfahren nach einem der Ansprüche 13 bis 52 ausführt.

## Revendications

1. Dispositif de rendu d'une séquence d'images de reconstruction multi-planaire, MPR, à partir d'un ensemble de données de volume (48) défini par un plan de MPR. (72) se déplaçant à travers les données de volume, le dispositif comprenant une unité centrale de traitement, CPU, (24) couplée à une mémoire système. (46) stockant les données de volume, et une unité de traitement graphique, GPU, (44) couplée à une mémoire de GPU (56) et à la CPU, dans lequel le dispositif permet de :
(a) diviser virtuellement l'ensemble de données de volume en une pluralité de blocs de voxels selon une construction géométrique ;
(b) prédire à partir de positions actuelles et/ou précédentes du plan de MPR quels blocs des données de volume peuvent être nécessaires pour l'affichage à un instant futur où le plan de MPR s'est déplacé ;
(c) pré-charger des blocs prédits à l'étape (b) destinés à être utilisés éventuellement dans le futur à partir de la mémoire système en préparation pour le transfert à la mémoire de GPU ; et
(d) transférer selon un protocole d'ordonnancement au moins certains des blocs pré-chargés à la mémoire de GPU avant que le plan de MPR ne se déplace en intersection avec ces blocs,
**caractérisé en ce que** la GPU permet de générer une série d'images de MPR d'une région de données de volume, la série d'images de MPR correspondant à une hiérarchie d'épaisseurs de tranches MPR différentes et de stocker la série d'images de MPR dans la mémoire de GPU, de manière qu'une image de MPR de la région des données de volume ayant une épaisseur de tranche MPR arbitraire puisse être rendue en accumulant des images appropriées de la hiérarchie d'images d'épaisseurs de tranche MPR différentes.

2. Dispositif selon la revendication 1, dans lequel la GPU permet de maintenir des blocs de voxels comprenant les données de volume dans la mémoire de GPU à la suite du rendu d'une image de MPR.

3. Dispositif selon la revendication 1 ou 2, le dispositif étant configuré de sorte que, quand la mémoire de GPU allouée au stockage de blocs est pleine, des blocs sont écrasés dans la mémoire de GPU selon un protocole de remplacement qui tient compte de la fraction de la mémoire de GPU allouée au stockage de blocs qui est nécessaire pour stocker les blocs nécessaires pour rendre une image de MPR.

4. Dispositif selon la revendication 1, 2 ou 3, dans lequel la mémoire de GPU a une dimension spécifiée pour stocker des blocs et la GPU permet de traiter les blocs nécessaires pour rendre des images de MPR dans un ordre de série direct et inverse dans des images de MPR rendues alternativement.

5. Dispositif selon l'une quelconque des revendications précédentes, dans lequel la CPU permet d'assembler les blocs de voxels comprenant les données de volume à transférer à la mémoire de GPU comme des textures 3D.

6. Dispositif selon l'une quelconque des revendications précédentes, dans lequel les blocs de voxels comprenant les données de volume sont agencés sur une grille irrégulière.

7. Dispositif selon la revendication 6, dans lequel les blocs de voxels comprenant les données de volume sont agencés sur une grille en quinconce.

8. Dispositif selon l'une quelconque des revendications précédentes, dans lequel les blocs de voxels comprenant les données de volume ne sont pas spécifiées dans la mémoire des systèmes, mais sont définies par la CPU au moment où elles sont récupérées à partir de la mémoire système.

9. Dispositif selon l'une quelconque des revendications précédentes, le dispositif comprenant en outre un affichage pour visualiser une image de MPR rendue.

10. Dispositif selon l'une quelconque des revendications précédentes, le dispositif permettant de rendre la séquence d'images de MPR pour la visualisation par un utilisateur à une fréquence d'image contrôlée.

11. Dispositif selon la revendication 10, dans lequel la fréquence d'image contrôlée correspond à une progression à travers les données de Volume à une vitesse constante.

12. Dispositif selon la revendication 10 ou 11, le dispositif permettant de rendre des images successives partir de tranches MPR successive correspondantes qui se chevauchent entre elles sur plus de 50 % de leur épaisseur.

13. Procédé de rendu d'une séquence d'images de reconstruction multi-planaire, MPR, partir d'un ensemble de données de volume défini par un plan de MPR se déplaçant à travers les données de volume, sur un dispositif comprenant une unité centrale de traitement, CPU, (24) couplée à une mémoire système (46) stockant les données de volume, et une unité de traitement graphique, GPU, (44) couplée à une mémoire de GPU (56) et à la CPU, le procédé comprenant :
(a) la division virtuelle de l'ensemble de données de volume en une pluralité de blocs de voxels selon une construction géométrique ;
(b) la prédiction à partir de positions actuelles et/ou précédentes du plan de MPR dont les blocs des données de volume peuvent être nécessaires pour l'affichage à un instant futur où le plan de MPR s'est déplacé ;
(c) le pré-chargement de blocs prédits à l'étape (b) destinés à être utilisés éventuellement dans le futur à partir de la mémoire système en les récupérant à partir de la mémoire système et en les mettant en file d'attente en préparation pour le transfert à la mémoire de GPU ; et
(d) le transfert selon un protocole d'ordonnancement d'au moins certains des blocs pré-chargés à la mémoire de GPU avant que le plan de MPR ne se déplace en intersection avec ces blocs, **caractérisé par**
(e) la génération d'une série d'images de MPR d'une région de données de volume par la GPU, la série d'images de MPR correspondant à une hiérarchie d'épaisseurs de tranche MPR différentes, et le stockage de la série d'images de MPR dans la mémoire de GPU, et le rendu d'une image de MPR désirée de la région des données de volume ayant une épaisseur de tranche MPR arbitraire en accumulant des images appropriées de la hiérarchie d'images d'épaisseurs de tranche MPR différentes.

14. Procédé selon la revendication 13, comprenant en outre le maintien de blocs de voxels comprenant les données de volume dans la mémoire de GPU à la suite du rendu d'une image de MPR.

15. Procédé selon la revendication 13 ou 14, dans lequel, quand la mémoire de GPU allouée au stockage de blocs est pleine, des blocs sont écrasés dans la mémoire de GPU selon un protocole de remplacement qui tient compte de la fraction de la mémoire de GPU allouée au stockage de blocs qui est nécessaire pour stocker les blocs nécessaires pour rendre une image de MPR.

16. Procédé selon la revendication 13, 14 ou 15, dans lequel la mémoire de GPU a une dimension spécifiée pour stocker des blocs, le procédé comprenant en outre le rendu des blocs dans un ordre de série direct et inverse dans des images de MPR rendues alternativement.

17. Procédé selon l'une quelconque des revendications 13 à 16, comprenant en outre l'assemblage des blocs de voxels comprenant les données de volume à transférer à la mémoire de GPU comme des textures 3D.

18. Procédé selon l'une quelconque des revendications 13 à 17, dans lequel les blocs de voxels comprennent les données de volume sont agencées sur une grille irrégulière.

19. Procédé selon la revendication 18, dans lequel les blocs de voxels comprenant les données de volume sont agencés sur une grille en quinconce.

20. Procédé selon l'une quelconque des revendications 13 à 19, dans lequel les blocs de voxels comprenant les données de volume ne sont pas spécifiées dans la mémoire système, mais sont définies au moment où elles sont récupérées à partir de la mémoire système.

21. Procédé selon l'une quelconque des revendications 13 à 20, le procédé comprenant en outre la visualisation d'une image de MPR rendue.

22. Procédé selon l'une quelconque des revendications 13 à 21, comprenant en outre le rendu de la séquence d'images de MPR et la visualisation d'images successives de la séquence à une fréquence d'image contrôlée.

23. Procédé selon la revendication 22, dans lequel la fréquence d'image contrôlée correspond à une progression à travers les données de volume à une vitesse constante.

24. Procédé selon la revendication 22 ou 23, dans lequel des images successives sont rendues à partir de plaques de MPR successives correspondantes qui se chevauchent entre elles sur au moins 50 % de leur épaisseur.

25. Procédé selon la revendication 13 appliqué au rendu d'images de section transversale de données de volume, y compris des sections transversales avec épaisseur, comprenant en outre :
la définition de données de volume à représenter par image, de paramètres d'orientation et de position de plan, optionnellement également un ou plusieurs paramètres d'épaisseur, densité d'échantillon, paramètres de mode de projection et paramètres d'affichage ;
durant l'étape (d), le transfert desdits blocs à la mémoire de GPU à la demande sur la base de la relation géométrique entre les blocs et la section transversale à rendre ; et
le rendu de l'image en coupe transversale en utilisant la mémoire de GPU.

26. Procédé selon la revendication 25, dans lequel des blocs individuels de voxels sont collectés ou créés à la demande entre la division et le transfert.

27. Procédé selon la revendication 25 ou 26, dans lequel une mémoire cache de blocs de données de volume est maintenue sur la mémoire de GPU pour accélérer le rendu d'images en coupe transversale successives.

28. Procédé selon la revendication 27, dans lequel l'algorithme d'ordonnancement transfert des blocs pré-chargés à la mémoire de GPU avant l'instant où ils sont nécessaires.

29. Procédé selon la revendication 28 appliqué au rendu d'une séquence d'images en coupe transversale sur la base de plans parallèles, dans lequel l'algorithme d'ordonnancement est basé sur la séparation linéaire entre des plans en coupe transversale.

30. Procédé selon la revendication 29, dans lequel l'algorithme d'ordonnancement est également basé sur un intervalle temporel désiré entre des images.

31. Procédé selon la revendication 29 ou 30, dans lequel l'algorithme d'ordonnancement comprend également la considération de la liaison de communication à travers laquelle des blocs seront transmis au processeur graphique et est conçu de manière à éviter une saturation de la liaison de communication.

32. Procédé selon la revendication 28 appliqué au rendu d'une séquence d'images en coupe transversal sur la base de plans radiaux qui partagent un axe commun, dans lequel l'algorithme d'ordonnancement est basé sur la séparation angulaire entre des plans en coupe transversale.

33. Procédé selon la revendication 32, dans lequel l'algorithme d'ordonnancement est également basé sur un intervalle temporel entre des images.

34. Procédé selon la revendication 33, dans lequel l'algorithme d'ordonnancement comprend également la considération de la liaison de communication à travers laquelle des blocs seront transmis au processeur graphique et est conçu de manière à éviter une saturation de la liaison de communication.

35. Procédé selon la revendication 28 appliqué au rendu d'une séquence d'images en coupe transversale qui ont une localité spatiale mais une relation spatiale complexe, dans lequel l'algorithme d'ordonnancement est basé sur une estimation de la séparation entre les plans en coupe transversale.

36. Procédé selon la revendication 35, dans lequel la relation spatiale complexe est basée sur des plans successifs perpendiculaires à une courbe.

37. Procédé selon la revendication 35 ou 36, dans lequel l'algorithme d'ordonnancement est également basé sur un intervalle temporel désiré entre des images.

38. Procédé selon la revendication 35, 36 ou 37, dans lequel l'algorithme d'ordonnancement comprend également la considération de la liaison de communication à travers laquelle des blocs seront transmis au processeur graphique et est conçu pour éviter la saturation de la liaison de communication.

39. Procédé selon la revendication 28, dans lequel l'algorithme d'ordonnancement est l'arbitre unique du moment où des blocs de données de volume entrent dans ou quittent la mémoire cache.

40. Procédé selon l'une quelconque des revendications 28 à 39, dans lequel l'algorithme d'ordonnancement ajoute des blocs dans la mémoire cache et une stratégie de l'élément utilisée le moins récemment, LRU, est utilisée pour effacer des blocs de la mémoire cache.

41. Procédé selon la revendication 40, dans lequel, dans des conditions dans lequelles l'ensemble opérationnel de blocs de données est égal ou supérieur à la dimension de la mémoire cache, une stratégie de substitution de l'élément utilisé le plus récemment, MRU, est utilisée à la place.

42. Procédé selon la revendication 40 ou 41, dans lequel l'algorithme de rendu est conçu pour accéder à des blocs de données de volume dans un ordre qui n'entraîne pas une performance pathologique de la mémoire cache quand l'ensemble de travail dépasse la dimension de mémoire cache.

43. Procédé selon la revendication 42, dans lequel ledit ordre d'accès aux blocs est palindromique, autrement dit des blocs sont accédés par passages alternatifs croissants et décroissants ou une approximation de ceux-ci.

44. Procédé selon la revendication 28 appliqué au rendu d'une série d'images en coupe transversale avec épaisseur, et comprenant en outre :
le maintien d'une mémoire cache d'images en coupe transversale qui constituent des plans d'échantillonnage de la région en coupe transversale et/ou des sous-ensembles accumulés de ces images ; et
la création d'images en coupe transversale avec épaisseur en accumulant une sélection appropriée d'images mises en mémoire cache et, si nécessaire, d'images en coupe transversale additionnelles.

45. Procédé selon la revendication 42, dans lequel la mémoire cache d'images contient des images en coupe transversale.

46. Procédé selon la revendication 44 ou 45, dans lequel la mémoire cache d'images contient une hiérarchie d'images accumulées où le niveau 0 de la hiérarchie correspond des images en coupe transversale, le niveau 1 comprend une accumulation de toutes les K images, le niveau 2 comprend une accumulation de toutes les K² images, et ainsi de suite.

47. Procédé selon la revendication 46, dans lequel les niveaux les plus bas de la hiérarchie sont gommés.

48. Procédé selon la revendication 46, dans lequel les niveaux les plus bas de la hiérarchie sont gommés sauf s'ils sont proches des plans qui délimitent la zone en coupe transversale.

49. Procédé selon l'une quelconque des revendications 44 à 48, dans lequel le mode d'accumulation est un parmi :
(a) maximum :
(b) maximum de pixels excluant ceux avec une valeur prédéfinie ou se trouvant dans une plage de valeurs prédéfinie ;
(c) minimum ;
(d) minimum de pixels excluant ceux avec une valeur prédéfinie ou se trouvant dans une plage de valeurs prédéfinie ;
(e) moyenne ;
(f) moyenne de pixels excluant ceux avec une valeur prédéfinie ou se trouvant dans une plage de valeurs prédéfinie ;
(g) somme exponentielle inversé
(h) somme exponentielle inverse excluant ceux avec une valeur prédéfinie ou se trouvant dans une plage de valeurs prédéfinie ; et
(i) un rendu de volume basé sur l'opacité.

50. Procédé selon l'une quelconque des revendications 44 à 49 appliqué au rendu d'une séquence d'images en coupe transversale avec épaisseur où il existe un chevauchement substantiel entre des positions successives de la zone en coupe transversale, de sorte que la majorité des données d'image nécessaires pour une nouvelle image soient présentes dans la mémoire cache.

51. Procédé selon la revendication 46 appliqué au rendu d'une séquence d'images en coupe transversale avec épaisseur où il existe un chevauchement substantiel entre des positions successives de la zone en coupe transversale, de sorte que le rendu d'une nouvelle image nécessite au plus O(log(N)) accumulations d'images et au plus O(log(N)) rendus d'images en coupe transversale, où N est l'épaisseur de la zone de coupe transversale.

52. Procédé selon l'une quelconque des revendications 34 à 51, dans lequel le protocole d'ordonnancement détermine s'il existe un espace dans la mémoire de GPU pour recevoir des blocs pré-chargés avant de les transférer à la mémoire de GPU.

53. Produit de programme d'ordinateur comprenant des instructions lisibles par ordinateur pour exécuter sur un ordinateur le procédé selon l'une quelconque des revendications 13 à 52.

54. Produit de programme d'ordinateur selon la revendication 53 comprenant un programme d'ordinateur sur un support.

55. Produit de programme d'ordinateur selon la revendication 54, dans lequel le support est un support de stockage.

56. Produit de programme d'ordinateur selon la revendication 54, dans lequel le support est un support de transmission.

57. Ordinateur configuré pour effectuer le procédé selon l'une quelconque des revendications 13 à 52.
